(19) Europäisches Patentamt / European Patent Office / Office européen des brevets

(11) **EP 4 350 646 A1**

(12) # EUROPEAN PATENT APPLICATION
published in accordance with Art. 153(4) EPC

(43) Date of publication:
**10.04.2024 Bulletin 2024/15**

(21) Application number: **22920077.9**

(22) Date of filing: **28.12.2022**

(51) International Patent Classification (IPC):
**G06V 30/412** (2022.01)

(52) Cooperative Patent Classification (CPC):
**G06N 3/0442; G06N 3/0464; G06N 3/08;
G06V 30/412; G06V 30/413; G06V 30/414**

(86) International application number:
**PCT/CN2022/142667**

(87) International publication number:
**WO 2023/134447 (20.07.2023 Gazette 2023/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.01.2022   CN 202210029776
23.02.2022   CN 202210168027**

(71) Applicant: **Huawei Technologies Co., Ltd.
Shenzhen, Guangdong 518129 (CN)**

(72) Inventors:
• **HUANG, Yongshuai**
  **Shenzhen, Guangdong 518129 (CN)**
• **LU, Ning**
  **Shenzhen, Guangdong 518129 (CN)**
• **DU, Lin**
  **Shenzhen, Guangdong 518129 (CN)**

(74) Representative: **Thun, Clemens
  Mitscherlich PartmbB
  Patent- und Rechtsanwälte
  Karlstraße 7
  80333 München (DE)**

(54) **DATA PROCESSING METHOD AND RELATED DEVICE**

(57) A data processing method and an apparatus are disclosed. The method includes: obtaining a to-be-processed table image; determining a table recognition result based on the table image and a generative table recognition policy, where the generative table recognition policy indicates to determine the table recognition result of the table image by using a markup language and a non-overlapping attribute of a bounding box, the bounding box indicates a position of a text included in a cell in a table associated with the table image, and the table recognition result indicates a global structure and content that are included in the table; and outputting the table recognition result. Performing recognition on a table image in this way can improve accuracy of a table recognition result.

Method 800

Obtain a to-be-processed table image — 810

Determine a table recognition result based on the table image and a generative table recognition policy, where the generative table recognition policy indicates to determine the table recognition result of the table image by using a markup language and a non-overlapping attribute of a bounding box, the bounding box indicates a location of a text included in a cell in a table associated with the table image, and the table recognition result indicates a global structure and content that are included in the table — 820

Output the table recognition result — 830

FIG. 8

**Description**

**TECHNICAL FIELD**

This application relates to the field of artificial intelligence, and in particular, to a data processing method, apparatus, and system, and a data processing chip.

**BACKGROUND**

Image table recognition (table recognition for short) is an artificial intelligence (artificial intelligence, AI) technology that converts a table in an image into an editable table (for example, a hypertext markup language (hypertext markup language, HTML) format). The image table recognition plays an important role in automatic processing of a document format.

In a table recognition method provided in a conventional technology, row and column lines are first detected on a table in an image, and then all crosspoints between the row and column lines included in the table are computed, so that coordinates of each cell (namely, a position of the cell) included in the table can be restored. After the positions of all the cells are obtained, all the cells are arranged based on the positions of the cells, and row and column information (for example, a start row, a start column, a cross-row, or a cross-column) of the cells is obtained by using a heuristic algorithm, to obtain a table recognition result. In this implementation, when the row and column lines are not obvious or the row and column lines are tilted, missing detection for the row and column lines or a crosspoint computation error may occur, and accuracy of the table recognition result obtained in this manner is poor.

Therefore, there is an urgent need for a data processing method that can improve accuracy of the table recognition result.

**SUMMARY**

This application provides a data processing method, apparatus, system, and a data processing chip, to improve accuracy of a table recognition result.

According to a first aspect, a data processing method is provided, including: obtaining a to-be-processed table image; determining a table recognition result based on the table image and a generative table recognition policy, where the generative table recognition policy indicates to determine the table recognition result of the table image by using a markup language and a non-overlapping attribute of a bounding box, the bounding box indicates a position of a text included in a cell in a table associated with the table image, and the table recognition result indicates a global structure and content that are included in the table; and outputting the table recognition result.

The markup language may indicate a local structure of the table, and the local structure of the table is a partial structure in the global structure of the table. A structure of the table may include: a row of the table, a column of the table, a cell included in the table, and a bounding box corresponding to each cell in the table and a text included in each cell in the table. The bounding box corresponding to the text may be a bounding box that is of any polygon and that encloses the text included in the cell. A position of the text included in the cell in the table may be understood as a position of the bounding box corresponding to the text included in the cell in the table.

In the foregoing technical solution, a table can be recognized based on a markup language identifying a structure of a table and a position in which a text included in a cell in a table is located in the table, to obtain a table recognition result. In this way, a problem that accuracy of the recognition result is poor in a conventional technology in which a table is recognized based only on a row-column structure of the table (where the row-column structure of the table does not include a bounding box) is avoided. The method provided in this application can improve the accuracy of the table recognition result.

In a possible design, the non-overlapping attribute of the bounding box indicates that areas corresponding to all cells included in the table do not overlap.

That the areas corresponding to all the cells included in the table do not overlap means that all the cells included in the table do not overlap, and bounding boxes corresponding to texts included in the cells do not overlap either. The bounding box may be a box that is of any polygon and that encloses a text included in one cell. The bounding box may also be referred to as a bounding box corresponding to a text or a cell text block.

Optionally, in some implementations, the cells included in the table are arranged in row order.

In the foregoing technical solution, when table recognition is performed on the table image, not only the markup language used to mark the structure of the table is used, but also the non-overlapping attribute of the bounding box in the table is used. In other words, the method makes full use of a feature of the table, and helps improve robustness and the accuracy of the table recognition result.

In another possible design, the determining a table recognition result based on the table image and a generative table recognition policy includes: obtaining the table recognition result through iteration processing based on a table image feature and the markup language.

The table image feature may indicate one or more of the following features: a quantity of rows of the table, a quantity of columns of the table, a size of the table, a rowspan attribute of the table, a column-span attribute of the table, or a layout of the table. The layout of the table includes the markup language indicating the structure of the table, and the bounding box corresponding to each cell in the table or the text included in each cell in the table. In the foregoing technical solution, the table recognition result is predicted in an iteration manner based on the table image feature and the markup language, so that a predicted table recognition result is more accurate, and the accuracy of the table recognition result can be improved.

In another possible design, the iteration processing includes a plurality of rounds of iterations, and the method further includes: determining, based on the table image feature and the markup language, a first bounding box and a local structure that are obtained through a first iteration, where the first iteration is a processing process of any one of the plurality of rounds of iterations, the first bounding box indicates a bounding box of the local structure obtained through the first iteration, and the local structure is a partial structure of the global structure; and determining, when the global structure is obtained through a second iteration, that a processing result obtained through the second iteration is the table recognition result, where the second iteration is one time of iteration processing that is in the iteration processing and that is performed after the first iteration processing, and the processing result includes the global structure and the content.

The bounding box of the local structure obtained through the first iteration is a position of a text included in a cell in the local structure that is of the table and that is obtained through the first iteration. It may be understood that when the local structure does not include any cell, or any cell included in the local structure is an empty cell (where in other words, the cell does not include any text), the bounding box of the local structure is empty.

Optionally, when the second iteration is a latest iteration after the first iteration, in a process of the second iteration, it is determined, based on the first bounding box and the local structure that are obtained through the first iteration, that the processing result obtained through the second iteration is the table recognition result.

In the foregoing technical solution, during a current round of iteration (for example, the second iteration), a result of the current round of iteration is determined based on a bounding box and a local structure that are obtained through a previous round of iteration (for example, the first iteration). When the method is performed by an AI model, in each round of iteration, the method not only uses a generated local structure (the local structure may be marked by using the markup language) as a priori, but also uses a generated bounding box as a priori, and inputs both the generated local structure and the generated bounding box to the AI model, to guide next generation operation of the AI model. This method is equivalent to notifying the AI model of both a quantity of cells generated before the current round of iteration and specific positions in which the cells generated before the current round of iteration are located in the table. In this way, attention of the AI model is focused on cells that are not generated. This method can effectively reduce attention divergence of the AI model, and help improve the accuracy of the table recognition result.

A procedure of the foregoing multi-round iteration processing may be performed by a transformer decoder in a data processing model provided in this application. The transformer decoder may include two decoders, which are respectively denoted as a first decoder and a second decoder. The following uses an example in which the transformer decoder determines, based on the table image feature and the markup language, the first bounding box and the local structure that are obtained through the first iteration for description. For example, that the transformer decoder determines, based on the table image feature and the markup language, the first bounding box and the local structure that are obtained through the first iteration may include the following steps: processing the table image feature and the markup language by using the first decoder, to obtain a first output result, where the first output result indicates that a cell is a non-empty cell or a cell is not a non-empty cell; and performing, by the data processing model, a first operation on the first output result to obtain the local structure. The first operation may include normalized exponential function softmax processing. The processing the table image feature and the markup language by using the first decoder, to obtain a first output result includes: processing the table image feature and the markup language by using the first decoder, to obtain an output result of the first decoder; and performing, by the data processing model, linearization processing on the output result of the first decoder, to obtain the first output result.

In some possible designs, the first decoder includes a first residual branch, a second residual branch, and a third residual branch. The first residual branch includes a first attention head, the second residual branch includes a second attention head, and the third residual branch includes a first feedforward neural network FFN layer. The processing the table image feature and the markup language by using the first decoder, to obtain an output result of the first decoder includes: The first residual branch processes, a target vector to obtain an output result of the first residual branch, where the target vector is a vector obtained based on the markup language. The second residual branch processes the table image feature and the output result of the first residual branch, to obtain an output result of the second residual branch. The third residual branch performs target operation on an output result of the first FFN, to obtain the output result of the first decoder, where the output result of the first FFN is obtained by performing a second operation based on the output result of the second residual branch. The second operation may be a linear operation, and the linear operation may be specifically a linear transformation operation and a linear rectification function ReLU activation operation.

In some possible designs, the first residual branch further includes a first residual unit. That the first residual branch processes a target vector to obtain an output result of the first residual branch includes: The first residual unit performs a target operation on an output of the first attention head, to obtain the output result of the first residual branch, where the output of the first attention head is obtained by performing a multiplication operation based on a first vector, a second vector, and a third vector. The first vector is a query vector obtained based on the target vector, the second vector is a key vector obtained based on the target vector, and the third vector is a value vector obtained based on the target vector. The multiplication operation may include point multiplication and cross multiplication.

In some possible designs, the second residual branch further includes a second residual unit. That the second residual branch processes the table image feature and the output result of the first residual branch, to obtain an output result of the second residual branch includes: The second residual unit performs a target operation on an output of the second attention head, to obtain the output result of the second residual branch, where the output of the second attention head is obtained by performing a multiplication operation on a fourth vector, a fifth vector, and a sixth vector. The fourth vector is a key vector obtained based on the table image feature, the fifth vector is a value vector obtained based on the table image feature, and the sixth vector is a query vector obtained based on the output result of the first residual branch.

In some possible designs, the target vector is a vector obtained by performing a third operation based on positional encoding information, a second bounding box, and the markup language. The positional encoding information indicates a position in which the local structure indicated by the markup language is located in the table, and the second bounding box indicates a bounding box of the local structure. The third operation may be an addition operation. The bounding box of the local structure indicates a position of the text included in the cell in the local structure in the table. It may be understood that when the local structure does not include a cell, or any cell included in the local structure does not include a text, the bounding box of the local structure is empty.

In the foregoing technical solution, the target vector is obtained based on the positional encoding information, the second bounding box, and the markup language. The positional encoding information indicates the position in which the local structure indicated by the markup language is located in the table. This helps improve the robustness and accuracy of the table recognition result.

In some possible designs, when the first output result indicates the non-empty cell, the data processing method further includes: processing the table image feature and the first output result by using the second decoder to obtain a second output result, where the second output result indicates the first bounding box; and performing, by the data processing model, a target operation on the second output result to obtain the first bounding box. The second decoder may obtain the second output result through a plurality of rounds of iterations. It may be understood that a working principle of each iteration performed by the second decoder is the same as a working principle of each iteration performed by the first decoder, except that input data and output data of the two decoders are different.

It may be understood that, in the foregoing technical solution, the second decoder may be triggered to determine, based on an output of the first decoder, a bounding box corresponding to the output of the first decoder only when the output of the first decoder indicates a non-empty cell. This method can reduce redundancy of a predicted bounding box and improve efficiency of the table recognition result. In addition, in the method, all bounding boxes included in the table are predicted in an iteration manner, so that the predicted bounding boxes are more accurate, and accuracy of the table recognition result is further improved.

The foregoing technical solution may be applied to a transformer decoder in the data processing model provided in this application. The transformer decoder may include a decoder #1 and a decoder #2. The decoder #1 may perform, based on the markup language identifying the structure of the table and the position in which the text included in the cell in the table is located in the table, table recognition on the table included in the table image through a plurality of rounds of iterations. In this way, a problem that accuracy of a recognition result is poor in the conventional technology in which the table is recognized based only on a row-column structure of the table (where the row-column structure of the table does not include a bounding box) is avoided. When an output result of the decoder #1 indicates a non-empty cell, an output of the decoder #1 may be used as an input of the decoder #2, so that the decoder #2 determines, based on the output result of the decoder #1 and the table image feature, a specific position in which a text included in the non-empty cell indicated by the output of the decoder #1 is located in the table. In conclusion, the method can improve the accuracy of the table recognition result and recognition efficiency.

In another possible design, the method further includes: correcting the first bounding box obtained through the first iteration.

Optionally, in a next round of iteration after the first iteration, table recognition may be performed based on a corrected bounding box.

In the foregoing technical solution, the first bounding box obtained through the first iteration may be corrected in real time, so that precision of the first bounding box can be further improved. In the next iteration after the first iteration, when processing is performed based on the corrected first bounding box, robustness and accuracy of an output result of the next iteration can be further improved. The method helps further improve the accuracy of the table recognition result.

In another possible design, the correcting the first bounding box obtained through the first iteration includes: correcting the first bounding box based on an input parameter and the table image.

Optionally, the input parameter may be one or more parameters obtained by a user based on the table image. The one or more parameters are used to correct the first bounding box.

In the foregoing technical solution, the user may determine, based on an actual need, the input parameter for correcting the first bounding box. The first bounding box is corrected in real time by manually inputting the input parameter by the user. The method can further improve user satisfaction while further improving the accuracy of the table recognition result.

In another possible design, the correcting the first bounding box obtained through the first iteration includes: correcting, when a matching degree between the second bounding box and the first bounding box is greater than or equal to a preset threshold, the first bounding box based on the second bounding box, where the second bounding box is obtained by processing the local structure by an error correction detection model, where the error correction detection model is a trained artificial intelligence AI model.

Optionally, the data processing model provided in this application may further include the error correction detection model.

In the foregoing technical solution, the correction detection model in the data processing model may be used to automatically correct, in real time, the first bounding box obtained through model prediction. This helps further improve the accuracy and recognition efficiency of the table recognition result.

In another possible design, the method further includes: correcting the table recognition result based on the table image, and outputting a corrected table recognition result.

In the foregoing technical solution, correcting the obtained table recognition result helps further improve the accuracy of the table recognition result.

In another possible design, the method further includes: performing feature extraction on the table image to obtain the table image feature.

The table image feature may indicate one or more of the following features: a quantity of rows of the table, a quantity of columns of the table, a size of the table, a rowspan attribute of the table, a column-span attribute of the table, or a layout of the table. The layout of the table includes the markup language indicating the structure of the table, and the bounding box corresponding to each cell in the table or the text included in each cell in the table.

The foregoing procedure of obtaining the table image feature may be performed by a feature extraction model in the data processing model provided in this application. The feature extraction model is a neural network model having a feature extraction function, and a structure of the feature extraction model is not specifically limited.

In another possible design, the table recognition result is identified by using any one of the following markup languages: a hypertext markup language HTML, an extensible markup language XML, or LaTex LaTex.

In the foregoing technical solution, the markup language may be used to identify the table recognition result, which facilitates subsequent further processing of the table recognition result.

According to a second aspect, a data processing apparatus is provided. The apparatus includes modules configured to perform the data processing method in any one of the first aspect or the possible implementations of the first aspect.

According to a third aspect, a data processing apparatus is provided. The data processing apparatus has functions of implementing the data processing apparatus described in any one of the first aspect or the possible implementations of the first aspect and any one of the second aspect or the possible implementations of the second aspect. The functions may be implemented based on hardware, or may be implemented based on hardware executing corresponding software. The hardware or the software includes one or more modules corresponding to the foregoing functions.

In a possible implementation, a structure of the data processing apparatus includes a processor, and the processor is configured to support the data processing apparatus in performing corresponding functions in the foregoing method.

The data processing apparatus may further include a memory. The memory is configured to be coupled to the processor, and stores program instructions and data that are necessary for the data processing apparatus.

In another possible implementation, the data processing apparatus includes a processor, a transmitter, a receiver, a random access memory, a read-only memory, and a bus. The processor is coupled to the transmitter, the receiver, the random access memory, and the read-only memory via the bus. When the data processing apparatus needs to be run, a basic input/output system built into the read-only memory or a bootloader bootloader system in an embedded system is used to boot a system to start, and boot the data processing apparatus to enter a normal running state. After the data processing apparatus enters the normal running state, an application program and an operating system are run in the random access memory, so that the processor performs the method according to any one of the first aspect or the possible implementations of the first aspect.

According to a fourth aspect, a computer program product is provided. The computer program product includes computer program code. When the computer program code is run on a computer, the computer is enabled to perform the method according to the first aspect or any one of the possible implementations of the first aspect.

According to a fifth aspect, a computer-readable medium is provided. The computer-readable medium stores program code. When the computer program code is run on a computer, the computer is enabled to perform the method according to any one of the first aspect or the possible implementations of the first aspect. The computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

According to a sixth aspect, a chip system is provided. The chip system includes a processor and a data interface. The processor reads, through the data interface, instructions stored in a memory, to perform the method in any one of the first aspect or the possible implementations of the first aspect. In a specific implementation process, the chip system may be implemented in a form of a central processing unit (central processing unit, CPU), a micro controller unit (micro controller unit, MCU), a micro processing unit (micro processing unit, MPU), a digital signal processor (digital signal processing, DSP), a system-on-a-chip (system-on-chip, SoC), an application-specific integrated circuit (application-specific integrated circuit, ASIC), a field programmable gate array (field programmable gate array, FPGA), or a programmable logic device (programmable logic device, PLD).

According to a seventh aspect, a data processing system is provided. The system includes a processor, and the processor is configured to perform the method in any one of the first aspect or the possible implementations of the first aspect.

According to an eighth aspect, a data processing cluster is provided. The cluster includes the plurality of data processing apparatuses described in any one of the second aspect or the possible implementations of the second aspect and any one of the third aspect or the possible implementations of the third aspect. The plurality of data processing apparatuses may be configured to perform the method in any one of the first aspect or the possible implementations of the first aspect.

In this application, based on the implementations provided in the foregoing aspects, the implementations may be further combined to provide more implementations.

## BRIEF DESCRIPTION OF DRAWINGS

FIG. 1 is a schematic diagram of a structure of an artificial intelligence main framework;
FIG. 2 is a schematic diagram of a structure of a standard transformer module;
FIG. 3 is a schematic diagram of a structure of a convolutional neural network;
FIG. 4 is a schematic diagram of another structure of a convolutional neural network;
FIG. 5 is a schematic diagram of a structure of a system architecture 500 according to an embodiment of this application;
FIG. 6 is a schematic diagram of a structure of a data processing model according to an embodiment of this application;
FIG. 7 is a schematic diagram of a structure of a decoder according to an embodiment of this application;
FIG. 8 is a schematic flowchart of a data processing method 800 according to an embodiment of this application;
FIG. 9a is a schematic flowchart of a data processing model training method 900 according to an embodiment of this application;
FIG. 9b is a schematic diagram of a bounding box included in a table according to an embodiment of this application;
FIG. 10 is a schematic flowchart of a data processing method 1000 according to an embodiment of this application;
FIG. 11 is a schematic diagram of an execution process of a data processing method 1000 according to an embodiment of this application;
FIG. 12 is a schematic diagram of an execution process of a data processing method 1000 according to an embodiment of this application;
FIG. 13 is a schematic diagram of a structure of a data processing apparatus 1300 according to an embodiment of this application;
FIG. 14 is a schematic diagram of a structure of a training apparatus 1400 according to an embodiment of this application; and
FIG. 15 is a schematic diagram of a structure of a computing device 1500 according to an embodiment of this application.

## DESCRIPTION OF EMBODIMENTS

The following describes technical solutions in embodiments of this application with reference to accompanying drawings.

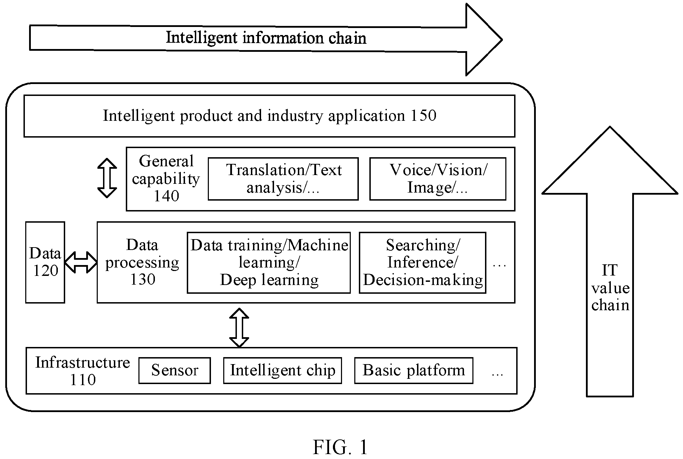

An overall working procedure of an artificial intelligence system is first described. FIG. 1 is a schematic diagram of a structure of an artificial intelligence main framework. The following describes the artificial intelligence main framework from two dimensions: an "intelligent information chain" (represented by the horizontal axis) and an "IT value chain" (represented by the vertical axis). The "intelligent information chain" reflects a series of processes from obtaining data to processing the data. For example, the processes may be general processes of intelligent information perception, intelligent information representation and formation, intelligent inference, intelligent decision-making, and intelligent execution and outputting. In this process, the data undergoes a refinement process of "data-information-knowledge-intelligence". The "IT value chain" is an industrial ecology process from an underlying infrastructure 110 of artificial intelligence, information (for technological implementation provisioning and processing) to a system, and reflects valueness brought by artificial intelligence to the information technology.

(1) Infrastructure 110

The infrastructure 110 provides computing capability support for the artificial intelligence system, implements communication with the external world, and implements support via a basic platform. The infrastructure 110 communicates with the outside via a sensor. The computing capability is provided by an intelligent chip (a hardware acceleration chip such as a central processing unit (central processing unit, CPU), an embedded neural-network processing unit (neural-network processing unit, NPU), a graphics processing unit (graphics processing unit, GPU), an application-specific integrated circuit (application-specific integrated circuit, ASIC), or a field-programmable gate array (field-programmable gate array, FPGA)). The basic platform includes related platform assurance and support such as a distributed computing framework and a network, and may include cloud storage and computing, an interconnection and interworking network, and the like. For example, the sensor communicates with the outside to obtain data, and the data is provided, for computing, to an intelligent chip in a distributed computing system provided by the basic platform.

(2) Data 120

The data 120 at an upper layer of the infrastructure 110 indicates a data source in the artificial intelligence field. The data 120 relates to graphs, images, voice, and text, and further relates to internet of things data of a conventional device, and includes service data of an existing system and perception data such as force, displacement, liquid level, temperature, and humidity.

(3) Data processing 130

The data processing 130 usually includes data training, machine learning, deep learning, searching, inference, decision-making, and the like. The machine learning and deep learning may be used for symbolic and formalized intelligent information modeling, extraction, preprocessing, training, and the like on the data 120.

The inference is a process in which a human intelligent inference manner is simulated in a computer or an intelligent system, and machine thinking and problem resolving are performed by using formatted information according to an inference control policy. Typical functions of inference are searching and matching.

The decision-making is a process in which decisions are made after intelligent information is inferred, and usually provides classification, ranking, prediction, and other functions.

(4) General capability 140

After the data 120 experiences the data processing 130 mentioned above, some general capabilities, which may be, for example, an algorithm or a general system, such as translation, text analysis, computer vision processing, voice recognition, and image recognition may further be formed based on a result of the data processing 130.

(5) Intelligent product and industry application 150

The intelligent product and industry application 150 refers to products and application of the artificial intelligence system in various fields, which is packaging of an overall solution of the artificial intelligence, to productize decision-making for intelligent information and application implementation. Application fields thereof mainly include smart terminal, smart transportation, smart health care, autonomous driving, smart city, and the like.

Embodiments of this application may be applied to various fields of artificial intelligence, including smart manufacturing, smart transportation, smart home, smart health care, smart security protection, autonomous driving, smart city, smart terminal, and the like.

For ease of understanding, the following describes terms related to embodiments of this application and neural network-related concepts.

(1) Neural network

The neural network is constituted by neural units. A neural unit may be an operation unit that uses xs and an intercept of 1 as an input. An output of the operation unit may be as follows:

Herein, s = 1, 2, ..., n, where n is a natural number greater than 1, Ws is a weight of xs, and b is a bias of the neural unit. Herein, f indicates an activation function (activation function) of the neural unit. The activation function is used to introduce a non-linear feature into the neural network, to convert an input signal in the neural unit into an output signal. The output signal of the activation function may be used as an input of a convolution layer. The activation function may be a sigmoid function. The neural network is a network formed by connecting together multiple single neural units aforementioned. To be specific, an output of a neural unit may be an input of another neural unit. An input of neural unit may be connected to a local receptive field of a previous layer to extract a feature of the local receptive field. The local receptive field may be an area including several neural units.

(2) Transformer model

The transformer model may also be referred to as a transformer module, a transformer structure, or the like. The transformer model is a multi-layer neural network that is based on a self-attention module. Currently, the transformer model is mainly used to process natural language tasks. The transformer model mainly includes a multi-head self-attention module and a feedforward neural network (feedforward neural network, FFN) that are stacked. The transformer model may be further divided into an encoder (also referred to as an encoding module) and a decoder (also referred to as a decoding module), and compositions of the encoder and the decoder are roughly similar and somewhat different.

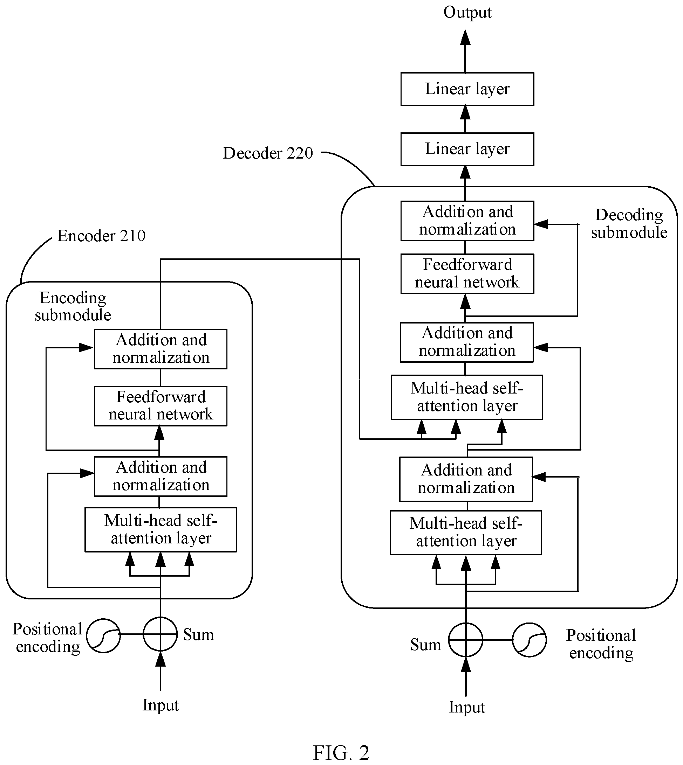

FIG. 2 is a schematic diagram of a structure of a standard transformer module. As shown in FIG. 2, an encoder 210 is on the left, and a decoder 220 is on the right. The encoder 210 may include any quantity of encoding submodules, and each encoding submodule includes one multi-head self-attention module and one feedforward neural network. The decoder 220 may include any quantity of decoding submodules, and each decoding submodule includes two multi-head self-attention modules and one feedforward neural network. The quantity of the encoding submodules may be equal to or unequal to the quantity of the decoding submodules.

(3) Attention mechanism (attention mechanism)

The attention mechanism simulates an internal process of biological observation behavior, which is a mechanism that aligns internal experience with external feelings to increase observation fineness of some areas. The mechanism can quickly filter out highly valuable information from a large amount of information by using limited attention resources. The attention mechanism is widely used in natural language processing tasks, especially machine translation, because the attention mechanism can quickly extract important features of sparse data. Additionally, a self-attention mechanism (self-attention mechanism) is an improved attention mechanism. The self-attention mechanism becomes less dependent on external information and is better at capturing internal correlation between data or features. An essential idea of the attention mechanism may be expressed by using the following formula:

Herein, Lx = ‖Source‖ represents a length of Source. The formula means that constituent elements in Source are imaged to be a series of data pairs. In this case, for an element Query (Q for short) in a given target Target, a similarity or a correlation between Query and each Key (K for short) is computed, to obtain a weight coefficient of Value (V for short) corresponding to each Key, and obtain a final Attention value. Therefore, the Attention mechanism is essentially to perform weighted summation on Value values of the elements in Source. Herein, Query and Key are used to compute a weight coefficient of corresponding Value. Conceptually, the attention mechanism may be understood as filtering out a small amount of important information from a large amount of information to focus on the important information and ignore most unimportant information. The focusing process is reflected in computation of a weight coefficient. A larger weight indicates that a Value value corresponding to the weight is more focused on. In other words, the weight indicates importance of information, and Value indicates information corresponding to the weight. The self-attention mechanism may be understood as an intra Attention (intra attention) mechanism. The Attention mechanism occurs between the element Query in Target and each element in Source. The self-attention mechanism indicates an Attention mechanism that occurs between elements in Source or between elements in Target, and may also be understood as an attention computation mechanism in a special case in which Target = Source. A specific computation process of the self-attention mechanism in the special case is the same, except that a computing object changes.

(4) Convolutional neural network (convolutional neural network, CNN)

The convolutional neural network is a deep neural network with a convolutional structure. The convolutional neural network includes a feature extractor that includes a convolution layer and a sub sampling layer, where the feature extractor may be considered as a filter. The convolution layer is a neural unit layer that is in the convolutional neural network and at which convolution processing is performed on an input signal. At the convolution layer of the convolutional neural network, one neural unit may be connected only to some adjacent-layer neural units. One convolution layer usually includes several feature planes, and each feature plane may include some neural units that are in a rectangular arrangement. Neural units at a same feature plane share a weight, and the weight shared herein is a convolution kernel. Weight sharing may be understood as that a feature extraction manner is irrelevant to a position. The convolution kernel may be in the form of a matrix of a random size. In a training process of the convolutional neural network, for the convolution kernel, a reasonable weight may be obtained through learning. In addition, direct benefits of the weight sharing are that there are fewer connections among layers of the convolutional neural network, and the risk of overfitting is reduced.

The CNN is a very common neural network. As described in the foregoing descriptions of basic concepts, the convolutional neural network is a deep neural network with a convolutional structure, which is a deep learning (deep learning) architecture. The deep learning architecture refers to multi-level learning performed at different abstract levels by using a machine learning algorithm. As a deep learning architecture, the CNN is a feedforward (feed-forward) artificial neural network, and each neural unit in the feedforward artificial neural network may respond to an input.

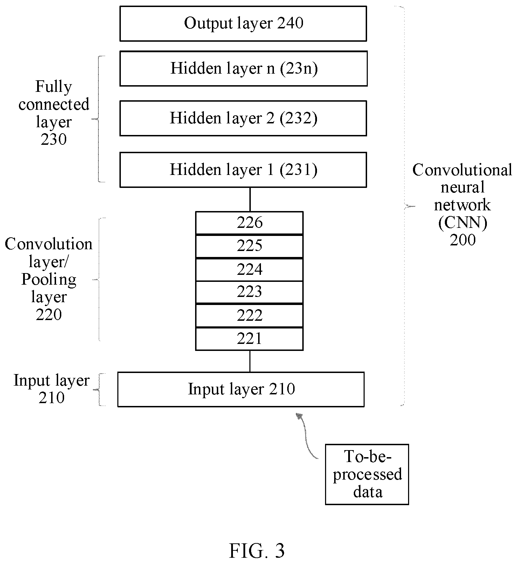

The following mainly describes a structure of the CNN in detail with reference to FIG. 3. As shown in FIG. 3, a convolutional neural network (CNN) 200 may include an input layer 210, a convolution layer/pooling layer 220 (where the pooling layer is optional), and a fully connected layer (fully connected layer) 230.
Convolution layer/pooling layer 220:
Convolution layer:
The following uses a convolution layer 221 as an example to describe an internal working principle of one convolution layer.

The convolution layer 221 may include a plurality of convolution operators. The convolution operator is also referred to as a kernel. The convolution operator functions as a filter that extracts specific information from an input image matrix during image processing. The convolution operator may essentially be a weight matrix, which is usually predefined. An image is used as an example (it is similar for other data types). In a process of performing a convolution operation on the image, the weight matrix usually processes pixels successively at a granularity of one pixel (or two pixels, depending on a value of a stride stride) in a horizontal direction on the input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows $\times$ columns), namely, a plurality of same-type matrices, are applied. Outputs of the weight matrices are stacked to form a depth dimension of a convolution image. The dimension herein may be understood as being determined based on the foregoing "plurality". Different weight matrices may be used to extract different features from the image. For example, one weight matrix is used to extract edge information of the image, another weight matrix is used to extract a specific color of the image, and still another weight matrix is used to blur an unwanted noise in the image. The plurality of weight matrices have a same size (rows $\times$ columns), and feature maps extracted from the plurality of weight matrices with a same size have a same size. Then, the plurality of extracted feature maps with a same size are combined to form an output of the convolution operation.

Weight values in these weight matrices need to be obtained through a lot of training during actual application. Each weight matrix formed by using the weight values obtained through training may be used to extract information from an input image, to enable the convolutional neural network 200 to perform correct prediction.

When the convolutional neural network 200 has a plurality of convolution layers, a large quantity of general features are usually extracted at an initial convolution layer (for example, 221). The general feature may also be referred to as a low-level feature. As the depth of the convolutional neural network 200 increases, a feature extracted at a subsequent convolution layer (for example, 226) becomes more complex, for example, a high-level semantic feature. A feature with higher semantics is more applicable to a to-be-resolved problem.

Pooling layer

Because a quantity of training parameters usually needs to be reduced, the pooling layer usually needs to be periodically introduced after a convolution layer. To be specific, for the layers 221 to 226 in 220 shown in FIG. 3, one convolution layer may be followed by one pooling layer, or a plurality of convolution layers may be followed by one or more pooling layers. During image processing, the pooling layer is only used to reduce a space size of an image. The pooling layer may include an average pooling operator and/or a maximum pooling operator, to perform sampling on the input image to obtain an image with a small size. The average pooling operator may be used to compute pixel values in the image in a specific range, to generate an average value. The average value is used as an average pooling result. The maximum pooling operator may be used to select a pixel with a maximum value in a specific range as a maximum pooling result. In addition, similar to that the size of the weight matrix at the convolution layer needs to be related to the size of the image, an operator at the pooling layer also needs to be related to the size of the image. A size of a processed image output from the pooling layer may be less than a size of an image that is input to the pooling layer. Each pixel in the image that is output from the pooling layer represents an average value or a maximum value of a corresponding sub-area of the image that is input to the pooling layer.

Fully connected layer 230

After processing performed at the convolution layer/pooling layer 220, the convolutional neural network 200 is not ready to output needed output information. This is because at the convolution layer/pooling layer 220, only a feature is extracted, and parameters resulting from an input image are reduced. However, to generate final output information (needed class information or other related information), the convolutional neural network 200 needs to use the fully connected layer 230 to generate an output of one needed class or outputs of a group of needed classes. Therefore, the fully connected layer 230 may include a plurality of hidden layers (231, 232, ..., and 23n shown in FIG. 3). Parameters included in the plurality of hidden layers may be obtained through pre-training based on related training data of a specific task type. For example, the task type may include image recognition, image classification, image super-resolution reconstruction, and the like.

At the fully connected layer 230, the plurality of hidden layers are followed by the output layer 240, namely, a last layer of the entire convolutional neural network 200. The output layer 240 has a loss function similar to a categorical cross entropy, and the loss function is specifically configured to compute a predicted error Once forward propagation (for example, propagation in a direction from 210 to 240 in FIG. 3) of the entire convolutional neural network 200 is completed, back propagation (for example, propagation in a direction from 240 to 210 in FIG. 3) is started to update a weight value and a deviation of each layer mentioned above, to reduce a loss of the convolutional neural network 200 and an error between a result output by the convolutional neural network 200 by using the output layer and an ideal result.

It should be noted that the convolutional neural network 200 shown in FIG. 3 is merely an example of a convolutional neural network. In specific application, the convolutional neural network may alternatively exist in a form of another network model, for example, a network model including only a part of the network structure shown in FIG. 3. For example, the convolutional neural network used in this embodiment of this application may include only the input layer 210, the convolution layer/pooling layer 220, and the output layer 240.

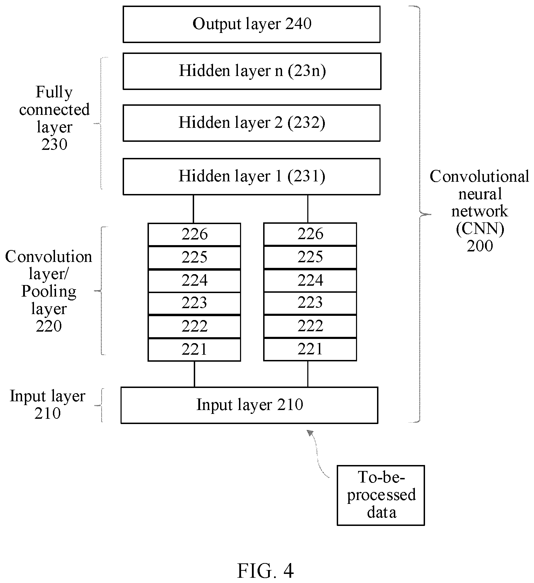

It should be noted that the convolutional neural network 200 shown in FIG. 3 is merely used as an example of a convolutional neural network. In specific application, the convolutional neural network may alternatively exist in a form of another network model, for example, a network model in which a plurality of convolution layers/pooling layers are parallel as shown in FIG. 4, and extracted features are all input to the fully connected layer 230 for processing.

This application provides a data processing method, including: obtaining a to-be-processed table image; determining a table recognition result based on the table image and a generative table recognition policy, where the generative table recognition policy indicates to determine the table recognition result of the table image by using a markup language and a non-overlapping attribute of a bounding box, the bounding box indicates a position of a text included in a cell in a table associated with the table image, and the table recognition result indicates a global structure and content that are included in the table; and outputting the table recognition result. In the method, the table is recognized based on the markup language identifying the structure of the table and the position in which the text included in the cell in the table is located in the table, to obtain a table recognition result. In this way, a problem that accuracy of the recognition result is poor in a conventional technology in which the table is recognized based only on a row-column structure of the table (where the row-column structure of the table does not include a bounding box) is avoided. This method can improve the accuracy of the table recognition result.

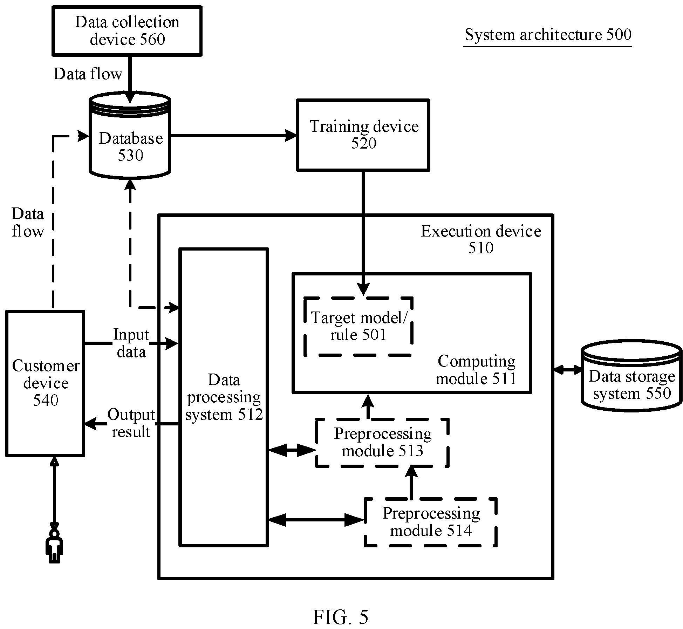

The following describes a system architecture of a model training phase and a model application phase in an embodiment of this application with reference to FIG. 5.

FIG. 5 describes in detail the system architecture provided in an embodiment of this application. FIG. 5 is a schematic diagram of a structure of a system architecture 500 according to an embodiment of this application. As shown in FIG. 5, the system architecture 500 includes an execution device 510, a training device 520, a database 530, a customer device 540, a data storage system 550, and a data collection system 560.

The execution device 510 includes a computing module 511, a data processing system 512, a preprocessing module 513, and a preprocessing module 514. The computing module 511 may include a target model/rule 501, and the preprocessing module 513 and the preprocessing module 514 are optional.

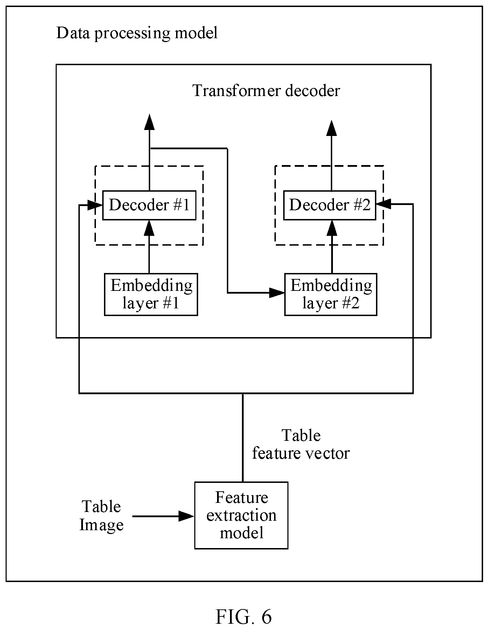

The data collection device 560 is configured to collect one or more training samples. For example, for a data processing method in embodiments of this application, if the sample is image data, the training sample may include a training image and a classification result corresponding to the training image, and the classification result of the training image may be a result of manual pre-annotation. After collecting the one or more training samples, the data collection device 560 stores the one or more training samples in the database 530. It should be understood that a data processing model provided in this application may further be maintained in the database 530. For example, FIG. 6 below is a schematic diagram of a structure of a data processing model according to an embodiment of this application. For details, refer to related descriptions of FIG. 6 below. Details are not described herein again.

The training device 520 may obtain the target model/rule 501 through training based on one or more training samples maintained in the database 530. The target model/rule 501 may be the data processing model provided in this application.

It should be noted that, in actual application, each of the one or more training samples maintained in the database 530 may be the training sample collected by the data collection device 560. Optionally, some of the one or more training samples maintained in the database 530 may be one or more training samples collected by another device other than the data collection device 560. In addition, it should be noted that the training device 520 may alternatively obtain one or more training samples from a cloud or another place to train the target model/rule 501. The foregoing descriptions should not be construed as a limitation on this embodiment of this application.

The target model/rule 501 obtained through training by the training device 520 may be applied to different systems or devices, for example, applied to the execution device 510 shown in FIG. 5. The execution device 510 may be a terminal, for example, a mobile phone terminal, a tablet computer, a notebook computer, an augmented reality (augmented reality, AR)/a virtual reality (virtual reality, VR) device, or an in-vehicle terminal, or may be a server, a cloud, or the like.

Specifically, the training device 520 may transfer the data processing model provided in this application to the execution device 510.

In FIG. 5, the execution device 510 includes a data processing system 512. The data processing system 512 is configured to exchange data with an external device. A user may input data (for example, a to-be-processed table image in this embodiment of this application) to the data processing system 512 by using the customer device 540.

The preprocessing module 513 and the preprocessing module 514 are configured to perform preprocessing based on input data received by the data processing system 512. It should be understood that there may be no preprocessing module 513 or preprocessing module 514, or there is only one preprocessing module. When the preprocessing module 513 and the preprocessing module 514 do not exist, the computing module 511 may be directly used to process the input data.

In a process in which the execution device 510 preprocesses the input data, or the computing module 511 of the execution device 510 performs processing related to computing or the like, the execution device 510 may invoke data, code, and the like in the data storage system 550 for corresponding processing, and may further store, in the data storage system 550, data, instructions, and the like that are obtained through the corresponding processing.

Finally, the data processing system 512 presents a processing result (for example, the table recognition result in this embodiment of this application) to the customer device 540, to provide the processing result to the user.

In the case shown in FIG. 5, the user may manually give input data, and the "manually giving the input data" may be operated by using a user interface (user interface, UI) provided by the data processing system 512. In another case, the customer device 540 may automatically send the input data to the data processing system 512. If it is required that the customer device 540 needs to obtain authorization from the user to automatically send the input data, the user may set corresponding permission in the customer device 540. The user may view, on the customer device 540, a result output by the execution device 510. The result may be specifically presented in a specific manner, for example, display, sound, or action. The customer device 540 may also serve as a data collection end, to collect, as new sample data, the input data that is input to the data processing system 512 and an output result that is output from the data processing system 512 that are shown in the figure and store the new sample data into the database 530. Certainly, the data processing system 512 may alternatively not perform collection. Instead, the customer device 540 directly stores, as new sample data into the database 530, the input data that is input to the data processing system 512 and the output result that is output from the data processing system 512 that are shown in the figure.

It should be noted that FIG. 5 is merely a schematic diagram of a system architecture according to an embodiment of this application. A position relationship between a device, a component, a module, and the like shown in FIG. 5 constitutes no limitation. For example, in FIG. 5, the data storage system 550 is an external memory relative to the execution device 510. In another case, the data storage system 550 may be alternatively disposed in the execution device 510. It should be understood that the execution device 510 may be deployed in the customer device 540.

The system architecture 500 shown in FIG. 5 may be applied to the application phase (also referred to as an inference phase) of the data processing model provided in this application and the training phase of the data processing model provided in this application. The following specifically describes specific functions of modules included in the system architecture 500 when the system architecture 500 is separately applied to the application phase of the data processing model and the training phase of the data processing model.

In some implementations, the system architecture shown in FIG. 5 may be applied to the application phase of the data processing model provided in this application. In this implementation, the computing module 511 of the execution device 510 may obtain code stored in the data storage system 550, to implement the data processing method in embodiments of this application. The computing module 511 of the execution device 510 may include a hardware circuit (for example, an application-specific integrated circuit (application-specific integrated circuit, ASIC), a field-programmable gate array (field-programmable gate array, FPGA), a graphics processing unit (graphics processing unit, GPU), a general-purpose processor, a digital signal processor (digital signal processing, DSP), a microprocessor, or a microcontroller), or a combination of these hardware circuits. For example, the training device 520 may be a hardware system having an instruction execution function, for example, a CPU or a DSP, or a hardware system having no instruction execution function, for example, an ASIC or an FPGA, or a combination of the hardware system having no instruction execution function and the hardware system having the instruction execution function. Specifically, the computing module 511 of the execution device 510 may be the hardware system having the instruction execution function. The data processing method provided in embodiments of this application may be software code stored in the memory. The computing module 511 of the execution device 510 may obtain the software code from the memory, and execute the obtained software code to implement the data processing method provided in embodiments of this application. It should be understood that the computing module 511 of the execution device 510 may be the combination of the hardware system having no instruction execution function and the hardware system having the instruction execution function. Some steps of the data processing method provided in embodiments of this application may alternatively be implemented by using the hardware system that is in the computing module 511 of the execution device 510 and that has no instruction execution function. This is not limited herein.

Optionally, in some implementations, the system architecture shown in FIG. 5 may be applied to the training phase of the data processing model provided in this application. In this implementation, the training device 520 may obtain code stored in a memory (not shown in FIG. 5, and may be integrated into the training device 520 or may be deployed separately from the training device 520), to implement the data processing method in embodiments of this application. The training device 520 may include a hardware circuit (for example, an application-specific integrated circuit (application-specific integrated circuit, ASIC), a field-programmable gate array (field-programmable gate array, FPGA), a graphics processing unit (graphics processing unit, GPU), a general-purpose processor, a digital signal processor (digital signal processing, DSP), a microprocessor, or a microcontroller), or a combination of these hardware circuits. For example, the training device 520 may be a hardware system having an instruction execution function, for example, a CPU or a DSP, or a hardware system having no instruction execution function, for example, an ASIC or an FPGA, or a combination of the hardware system having no instruction execution function and the hardware system having the instruction execution function. Specifically, the training device 520 may be the hardware system having the instruction execution function. The data processing method provided in this embodiment of this application may be software code stored in the memory. The training device 520 may obtain the software code from the memory, and execute the obtained software code to implement the data processing method provided in embodiments of this application. It should be understood that the training device 520 may be the combination of the hardware system having no instruction execution function and the hardware system having the instruction execution function. Some steps of the data processing method provided in embodiments of this application may alternatively be implemented by using the hardware system that is in the training device 520 and that has no instruction execution function. This is not limited herein.

The foregoing describes in detail, with reference to FIG. 5, the system architecture to which the data processing model provided in this application is applicable. The following describes, with reference to FIG. 6, a structure of the data processing model provided in this application. It may be understood that the data processing model provided in this application can implement the data processing method provided in this application. For ease of description, in the following, a model that can implement the data processing method provided in this application is briefly referred to as a data processing model. FIG. 6 shows a structure of the data processing model. For details about content related to the model, refer to the following descriptions in FIG. 6. Details are not described herein again.

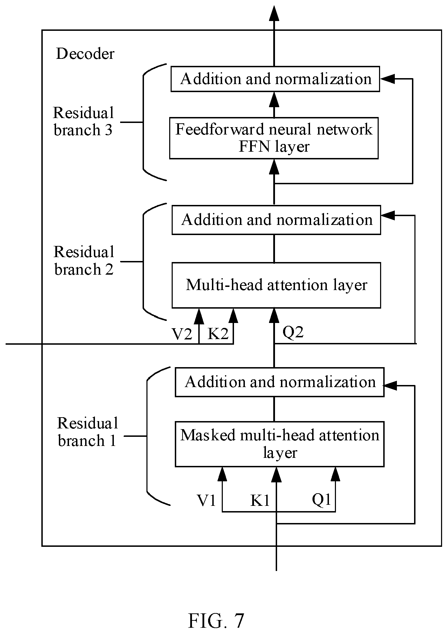

FIG. 6 is a schematic diagram of a structure of a data processing model according to an embodiment of this application. It may be understood that the data processing model may be a neural network model. As shown in FIG. 6, the data processing model includes a feature extraction model and a transformer decoder. The transformer decoder may include an embedding layer #1, an embedding layer #2, a decoder #1 formed by stacking N layers of decoders, and a decoder #2 formed by stacking M layers of decoders, where N and M are positive integers. A structure of any one of the N layers of decoders may be the same as a structure of any one of the M layers of decoders. For example, FIG. 7 below shows the structure of the decoder. For details, refer to related descriptions in FIG. 7. Details are not described herein again. Specific values of N and M may be set based on an actual need. Values of N and M may be equal or unequal. This is not specifically limited herein.

The following describes a specific working process of each part in the data processing model provided in this application.

1. Feature extraction model

The feature extraction model is a neural network model. The feature extraction model is used to extract a feature from a table image, to obtain a table feature vector (also referred to as a table image feature) included in the table image. The table feature vector may indicate one or more of the following features: a quantity of rows of the table, a quantity of columns of the table, a size of the table, a rowspan attribute of the table, a column-span attribute of the table, or a layout of the table. The layout of the table includes the markup language indicating the structure of the table, and the bounding box corresponding to each cell in the table or the text included in each cell in the table. The bounding box corresponding to the text may be any polygon that encloses the text. An output of the feature extraction model may include a value vector V2 corresponding to the table feature vector and a key vector K2 corresponding to the table feature vector.

The feature extraction model is not specifically limited. In some possible designs, the feature extraction model may be a CNN model. In some other possible designs, the feature extraction model may be a combined model including a CNN model and a feature pyramid network (feature pyramid network image, FPN) model.

2. Embedding layer

At the embedding layer, embedding processing may be performed on a current input, to obtain a plurality of feature vectors. A core feature of the data processing model is a unique attention mechanism used by the data processing model. The embedding layer encodes values, positions, and corresponding bounding boxes of nodes in a current sequence, and adds the code element by element to obtain an embedding vector. The embedding layer processes the embedding vector to obtain a query vector Q1, a key vector K1, and a value vector V1 that correspond to the embedding vector.

3. Decoder

FIG. 7 is a schematic diagram of a structure of a decoder according to an embodiment of this application. As shown in FIG. 7, the decoder sequentially includes a masked multi-head attention (masked multi-head attention) layer, addition and normalization (add&norm), a multi-head attention (multi-head attention, MHA) layer, addition and normalization, a feedforward (feed forward) layer, and addition and normalization. For ease of description, in the following, the masked multi-head attention (masked multi-head attention) layer and the addition and normalization may be referred to as a residual branch 1. The multi-head attention layer and the addition and normalization are referred to as a residual branch 2. The feedforward layer and the addition and normalization are referred to as a residual branch 3.

The masked multi-head attention layer obtains an input vector from an upper layer of the masked multi-head attention layer, and transforms, by using a self-attention mechanism, vectors based on an association degree between the vectors, to obtain an output vector of the masked multi-head attention layer. Addition and normalization processing is performed on the output vector of the masked multi-head attention layer, to obtain an output vector Q2 of the residual branch 1. It may be understood that, when the masked multi-head attention layer is a layer directly connected to the embedding layer, for example, the decoder directly connected to the embedding layer #1 in FIG. 6, the input vector obtained by the masked multi-head attention layer is the vector output by the embedding layer #1. For example, FIG. 7 shows that the masked multi-head attention layer is a layer directly connected to the embedding layer, and an input of the masked multi-head attention layer includes output vectors (Q1, K1, and V1) of the embedding layer. It may be further understood that, when the masked multi-head attention layer is a masked multi-head attention layer included in a subsequent decoder, for example, in FIG. 6, a masked multi-head attention layer included in a decoder #1 at this layer (N is equal to 2) that is directly connected to a decoder #1 at an upper layer (N is equal to 1), an input vector obtained by the masked multi-head attention layer is an output vector of the decoder #1 at the upper layer.

An input of the multi-head attention layer includes the vector Q2 output by the residual branch 1 and the output vectors (V2 and K2) of the feature extraction model. The vectors are transformed by using the self-attention mechanism based on the association degree between the vectors, to obtain the output vector. At the multi-head attention layer, the MHA layer based on multi-head attention (multi-head attention, MHA) includes a plurality of attention heads head.

The feedforward neural network FFN layer is configured to perform the following operations on the vector output by the residual branch 2: linear transformation and a linear rectification function (linear rectification function, ReLU) activation operation. Then, addition and normalization processing is performed on the vectors output by the feedforward neural network FFN layer, to obtain an output vector of the residual branch 3.

The foregoing describes the system architecture to which embodiments of this application are applicable and the data processing model for performing the method in embodiments of this application. The following describes the data processing method provided in embodiments of this application by using a model inference phase as an example.

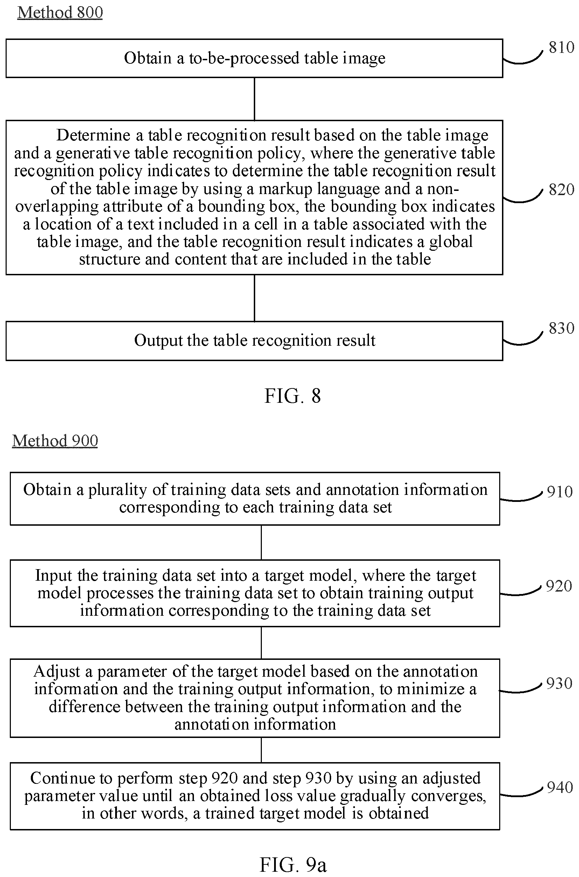

FIG. 8 is a schematic flowchart of a data processing method 800 according to an embodiment of this application.

It may be understood that the method 800 may be, but is not limited to being, performed by the data processing model shown in FIG. 6. The data processing model includes a feature extraction model and a transformer model, and the transformer model includes a decoder #1 and a decoder #2. As shown in FIG. 8, the method 800 includes step 810 to step 830. The following describes step 810 to step 830 in detail.

Step 810: Obtain a to-be-processed table image.

The obtaining a to-be-processed table image may include: The data processing model obtains the to-be-processed table image. For example, the data processing model may provide a user interface (user interface, UI) for a user, and the user inputs the table image by using the UI.

A quantity of tables included in the table image is not specifically limited, in other words, the table image may include one or more tables. Optionally, the table image may alternatively be replaced with a portable document format (portable document format, PDF).

Step 820: Determine a table recognition result based on the table image and a generative table recognition policy, where the generative table recognition policy indicates to determine the table recognition result of the table image by using a markup language and a non-overlapping attribute of a bounding box, the bounding box indicates a position of a text included in a cell in a table associated with the table image, and the table recognition result indicates a global structure and content that are included in the table.

The markup language may indicate a local structure of the table, and the local structure of the table is a partial structure in the global structure of the table. A structure of the table may include: a row of the table, a column of the table, a cell included in the table, and a bounding box corresponding to each cell in the table and a text included in each cell in the table. The bounding box corresponding to the text may be a bounding box that is of any polygon and that encloses the text included in the cell. A position of the text included in the cell in the table may be understood as a position of the bounding box corresponding to the text included in the cell in the table. Optionally, the markup language may be, but is not limited to, any one of the following markup languages: a hypertext markup language HTML, an extensible markup language (extensible markup language, XML), or LaTex LaTex.

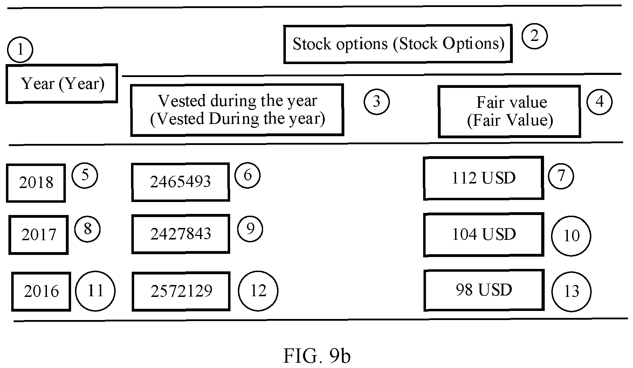

The non-overlapping attribute of the bounding box indicates that areas corresponding to all cells included in the table do not overlap. That the areas corresponding to all the cells included in the table do not overlap means that areas corresponding to texts included in the cells do not overlap either. For example, FIG. 9b is a schematic diagram of a bounding box included in a table according to this application. Refer to FIG. 9b. There is no overlapping area in a rectangular bounding box corresponding to a text included in each non-empty cell (where in other words, the cell includes a text).

The bounding box indicates a position of a text included in a cell in a table associated with the table image. In other words, the bounding box may be any polygon that encloses the text included in the cell. A shape of the bounding box is not specifically limited. For example, the polygon may be but is not limited to one of the following polygons: a rectangle, a square, a parallel quadrilateral, or another polygon (for example, a hexagon). In this embodiment of this application, a specific position in which the bounding box is located in the table may be determined based on coordinates of the bounding box. For example, when the bounding box is a rectangle, a specific position in which the rectangular bounding box is located in the table may be determined based on coordinates of the upper left corner of the rectangular bounding box and coordinates of the lower right corner of the rectangular bounding box. For another example, when the bounding box is a rectangle, a specific position in which the rectangular bounding box is located in the table may be determined based on coordinates of the lower left corner of the rectangular bounding box and coordinates of the upper right corner of the rectangular bounding box. It should be further understood that, when a cell in the table does not include any text, a position indicated by the bounding box is empty. A cell that does not include any text is also referred to as an empty cell.

Step 820 may be performed by a transformer decoder in the data processing model. The determining a table recognition result based on the table image and a generative table recognition policy includes: The transformer decoder obtains the table recognition result through iteration processing based on a table image feature and the markup language. The iteration processing may include a plurality of rounds of iterations, and the transformer decoder further performs the following steps: The transformer decoder determines, based on the table image feature and the markup language, a first bounding box and a local structure that are obtained through a first iteration, where the first iteration is a processing process of any one of the plurality of rounds of iterations, the first bounding box indicates a bounding box of the local structure obtained through the first iteration, and the local structure is a partial structure of the global structure. The transformer decoder determines, when the global structure is obtained through a second iteration, that a processing result obtained through the second iteration is the table recognition result, where the second iteration is one time of iteration processing that is in the iteration processing and that is performed after the first iteration processing, and the processing result includes the global structure and the content. The bounding box of the local structure obtained through the first iteration is a position of a text included in a cell in the local structure that is of the table and that is obtained through the first iteration. It may be understood that when the local structure does not include any cell, or any cell included in the local structure is an empty cell (where in other words, the cell does not include any text), the bounding box of the local structure is empty.

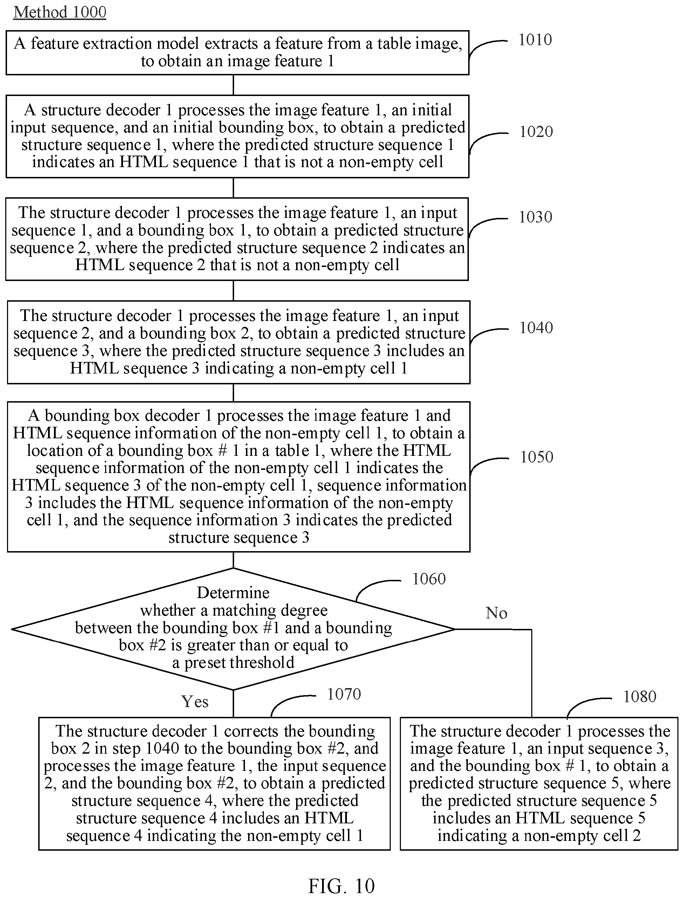

In the foregoing steps, that the transformer decoder determines, based on the table image feature and the markup language, the first bounding box and the local structure that are obtained through the first iteration includes: The decoder #1 determines the local structure based on the table image feature and the markup language, where the local structure includes a non-empty cell of the table, and the local structure is a partial structure in the global structure of the table. The decoder #2 determines, based on the table image feature and the non-empty cell of the table, a position in which the bounding box corresponding to the text included in the non-empty cell is located in the table. The position in which the bounding box corresponding to the text included in the non-empty cell is located in the table is a position in which the text included in the non-empty cell is located in the table. When the first iteration is a first iteration of the decoder #1, the markup language may include a sequence indicating a start of the markup language of a marked table. When the first iteration is an iteration after a first iteration of the decoder #1, the markup language may include a sequence indicating a local structure of the marked table. In this case, the local structure output by the decoder #1 includes the local structure of the table indicated by the markup language. It may be understood that when the local structure output by the decoder #1 does not include a non-empty cell (where in other words, the local structure does not include a bounding box), the decoder #2 may not need to perform iteration processing on the table image feature and the local structure. The decoder #1 and the decoder #2 may separately obtain the global structure of the table by performing a plurality of rounds of iterations. For example, FIG. 10 to FIG. 12 in the following show schematic diagrams of execution processes in which the decoder #1 and the decoder #2 separately determine the table recognition result through a plurality of rounds of iterations. For details, refer to related descriptions in FIG. 10 to FIG. 12. Details are not described herein again.

Optionally, after step 820, the following method may be further performed: correcting the first bounding box obtained through the first iteration. This correction manner may be understood as a real-time correction manner, in other words, a bounding box obtained at a time is corrected in a table recognition process. The correction processing may be performed by the decoder #1. It may be understood that, in a next round of iteration processing of the first iteration, processing may be performed based on a bounding box and a table image feature that are obtained after the first bounding box is corrected, to obtain a bounding box and a local structure that are obtained in a next round of iteration of the first iteration. The local structure obtained in the next round of iteration of the first iteration is a local structure in the global structure of the table, and the local structure obtained in the next round of iteration of the first iteration includes the local structure obtained in the first iteration. In some possible implementations, the correcting the first bounding box obtained through the first iteration includes: correcting the first bounding box based on an input parameter and the table image. The input parameter includes a parameter used to correct the first bounding box, and the input parameter may be a parameter obtained by the user based on the table image. During specific implementation, the data processing model may provide, for the user, the user interface (user interface, UI) having the input parameter, and the user inputs the input parameter via the UI. The specific implementation of the correction may be understood as a manner in which the user manually corrects the first bounding box. In some other possible implementations, the correcting the first bounding box obtained through the first iteration includes: when a matching degree between the second bounding box and the first bounding box is greater than or equal to a preset threshold, correcting the first bounding box based on the second bounding box, where the second bounding box is obtained by processing the local structure by an error correction detection model, and the error correction detection model is a trained artificial intelligence (artificial intelligence, AI) model. Optionally, the data processing model may further include the error correction detection model. Based on this, the specific implementation of the correction may be understood as a manner in which the data processing model automatically corrects the first bounding box. For example, the following step 1060 and step 1070 show a procedure of this automatic correction manner. For details, refer to related descriptions of the following step 1060 and step 1070. Details are not described herein again. In this embodiment of this application, the matching degree may be determined in any one of the following manners: intersection-over-union (intersection-over-union, IoU), or based on a distance between center points. For example, when the matching degree is determined in the manner of IoU, a larger IoU indicates a larger matching degree. For another example, when the matching degree is determined based on the distance between central points, a smaller distance indicates a larger matching degree. A value of the preset threshold is not specifically limited, and the value of the preset threshold may be set based on an actual need.

Optionally, after the global structure of the table is obtained, the following step may be further performed: obtaining, based on the global structure of the table, text content included in the global structure. A manner of obtaining, based on the global structure of the table, the text content included in the global structure is not specifically limited. For example, based on a text bounding box in the global structure, a cell image corresponding to the text bounding box may be captured. The cell image is recognized by using an optical character recognition (optical character recognition, OCR) system, to obtain text content included in the cell image.

Optionally, before step 820, the following method may be further performed: extracting a feature from the table image to obtain the table image feature. During specific implementation, the feature extraction model in the data processing model may extract the feature from the table image, to obtain the table image feature. The table image feature includes one or more of the following features: a quantity of rows of the table, a quantity of columns of the table, a size of the table, a rowspan attribute of the table, a column-span attribute of the table, or a layout of the table. The layout of the table includes the markup language indicating the structure of the table, and the bounding box of each cell included in the table or the cell text included in the table.

Optionally, the table recognition result may be identified by using any one of the following markup languages: a hypertext markup language HTML, an extensible markup language XML, or LaTex LaTex. For example, when the markup language in step 820 is the HTML, the table recognition result may be identified by using the HTML; and when the markup language in step 820 is the XML, the table recognition result may be identified by using the XML .

Step 830: Output the table recognition result.

Optionally, after step 830, the following method may be further performed: correcting the table recognition result based on the table image, and outputting a corrected table recognition result. The method may be performed by the data processing model. This correction method may be understood as a post-event correction manner. To be specific, the table recognition result may be corrected based on the table image after the table recognition result is obtained.

It should be understood that the method 800 is merely an example, and does not constitute any limitation on the data processing method provided in embodiments of this application.

In embodiments of this application, the data processing model can recognize, based on the markup language identifying the structure of the table and the position in which the text included in the cell in the table is located in the table, a table included in the table image through a plurality of rounds of iterations, to obtain the table recognition result corresponding to the table. In this way, a problem that accuracy of the recognition result is poor in a conventional technology in which the table is recognized based only on a row-column structure of the table (where the row-column structure of the table does not include a bounding box) is avoided. This method can improve the accuracy of the table recognition result. During specific implementation, during this round of iteration, the decoder #1 included in the transformer decoder in the data processing model can determine a local structure based on the table image feature and the markup language obtained in a previous round of iteration. When the output of the decoder #1 in this round of iteration indicates a non-empty cell, the decoder #2 included in the transformer decoder may determine, based on the output of the decoder #1 and the table image feature, a specific position in which a bounding box included in the non-empty cell indicated by the output of the decoder #1 is located in the table. In this way, redundancy of a predicted bounding box can be reduced and efficiency of the table recognition result can be improved. The decoder #2 predicts, in a manner of a plurality of rounds of iterations, bounding boxes of all non-empty cells in the table, so that the predicted bounding boxes are more accurate, and this helps improve the accuracy of the table recognition result. In addition, the data processing model may further correct the first bounding box obtained through the first iteration in real time, so that precision of the first bounding box can be further improved. In the next iteration after the first iteration, when processing is performed based on the corrected first bounding box, robustness and accuracy of an output result of the next iteration can be further improved. The method helps further improve the accuracy of the table recognition result.

The following describes a data processing model training method provided in embodiments of this application by using the model training phase as an example.

FIG. 9a is a schematic flowchart of a data processing model training method 900 according to an embodiment of this application. As shown in FIG. 9a, the method 900 includes step 910 to step 940. The following specifically describes step 910 to step 940.

Step 910: Obtain a plurality of training data sets and annotation information corresponding to each training data set.

Step 920: Input the training data set to a target model. The target model processes the training data set to obtain training output information corresponding to the training data set.

Step 930: Adjust a parameter of the target model based on the annotation information and the training output information, to minimize a difference between the training output information and the annotation information.

Step 940: Continue to perform step 920 and step 930 by using an adjusted parameter value until an obtained loss value gradually converges, in other words, a trained target model is obtained.

In some implementations, the target model and the trained target model each include a feature extraction model and a transformer decoder. The feature extraction model and the transformer decoder perform model training together. In this implementation, each training data set may include a table image, and the annotation information corresponding to each training data set may indicate a table feature included in the table image. The table feature includes one or more of the following features: a quantity of rows of a table, a quantity of columns of the table, a size of the table, a rowspan attribute of the table, a column-span attribute of the table, or a layout of the table. The layout of the table includes a markup language indicating a structure of the table, and a bounding box of each cell or a cell text. For example, FIG. 6 is a schematic diagram of a structure of a model including a feature extraction model and a transformer decoder.

Optionally, in some other implementations, the target model and the trained target model may each include a feature extraction model, a transformer decoder, and an error correction detection model. The error correction detection model may be a neural network model, and is configured to correct a bounding box corresponding to a text included in a cell in the table. The feature extraction model, the transformer decoder, and the error correction detection model perform model training together. In this implementation, each training data set may include a table image, and the annotation information corresponding to each training data set may indicate a table feature included in the table image. The table feature includes one or more of the following features: a quantity of rows of the table, a quantity of columns of the table, a size of the table, a rowspan attribute of the table, a column-span attribute of the table, or a layout of the table. The layout of the table includes the markup language indicating the structure of the table, and the bounding box of each cell or the cell text.

With reference to FIG. 10 to FIG. 12, the following describes a data processing method provided in embodiments of this application. It should be understood that examples in FIG. 10 to FIG. 12 are merely intended to help a person skilled in the art understand embodiments of this application, but are not intended to limit embodiments of this application to specific values or specific scenarios of the examples. It is clear that the person skilled in the art may make various equivalent modifications or changes based on the examples in FIG. 10 to FIG. 12 provided below, and such modifications and changes also fall within the scope of embodiments of this application.

Before the data processing method provided in embodiments of this application is described with reference to FIG. 10 to FIG. 12, table-related content in the method embodiment is first described.

In this embodiment of this application, an example in which a table image includes one table 1 and the table 1 may be represented by using an HTML language may be used for description. Optionally, the table 1 may alternatively be, but is not limited to being, represented by using any one of the following languages: an extensible markup language XML or LaTex LaTex. For example, content of this table may be shown in Table 1. The table 1 includes a plurality of cells, the plurality of cells include texts, and the cells included in the table 1 may be strictly arranged in a row-first order. For example, FIG. 9b shows a rectangular bounding box corresponding to a text included in each non-empty cell (where in other words, the cell includes a text) included in the table 1, and the number corresponding to each rectangular bounding box shown in FIG. 9b indicates a sequence in which cells included in the table 1 are arranged by row.

**Table 1**

| Year (Year) | Stock options (Stock Options) | |
| --- | --- | --- |
| | Vested during the year (Vested During the year) | Fair value (Fair value) |
| 2018 | 2465493 | 112 USD |
| 2017 | 2427843 | 104 USD |
| 2016 | 2572129 | 98 USD |

For ease of description, content of each cell included in Table 1 may be represented in a simplified manner. To be specific, if a cell includes a text, the cell is represented by "[]"; or if a cell does not include a text, the cell is represented by "". Based on this, content shown in Table 1 may be represented by using the following simplified HTML language:

```
<html>
<table>
<tr>
<td rowspan="2">[]</td>
<td colspan="2">[]</td>
</tr>
<tr>
<td>[]</td>
<td>[]</td>
</tr>
<tr>
<td>[]</td>
<td>[]</td>
<td>[]</td>
</tr>
<tr>
<td>[]</td>
<td>[]</td>
<td></td>
</tr>
```

```
<tr>
<td>[]</td>
<td>[]</td>
<td>[]</td>
</tr>
</table>
</html>
```

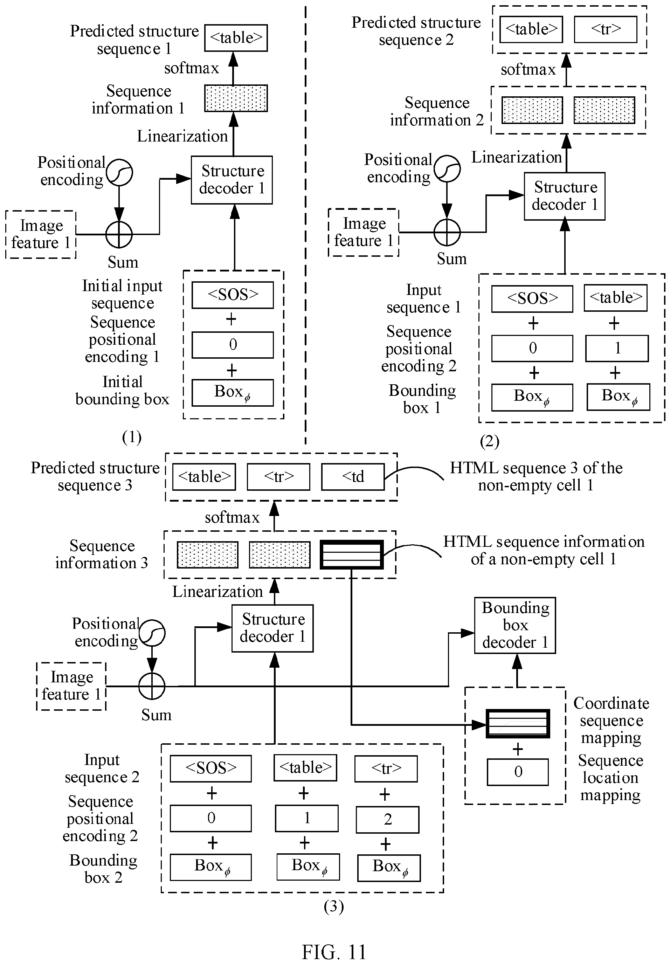

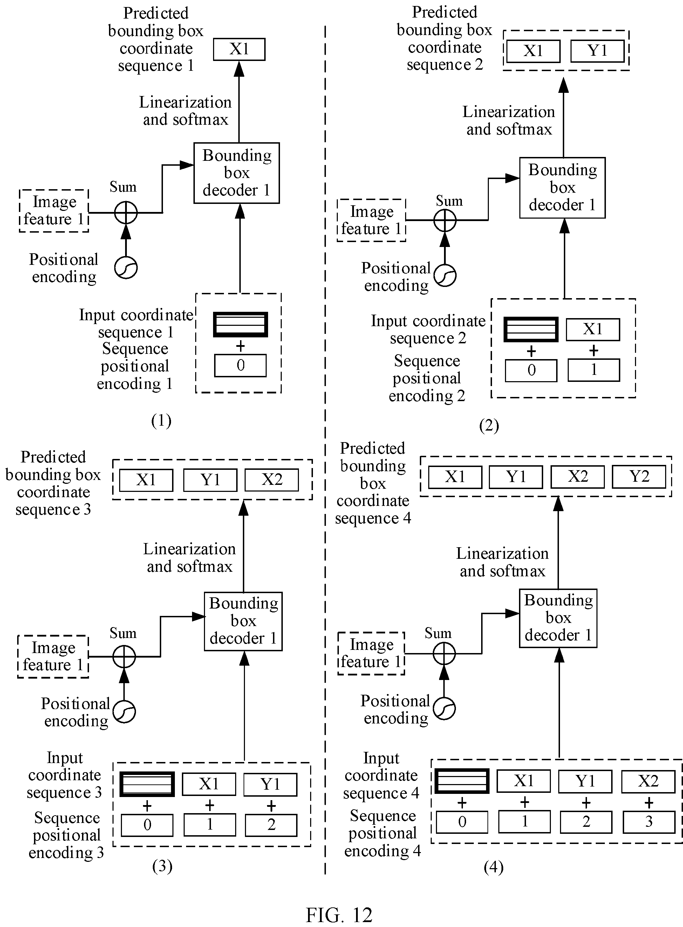

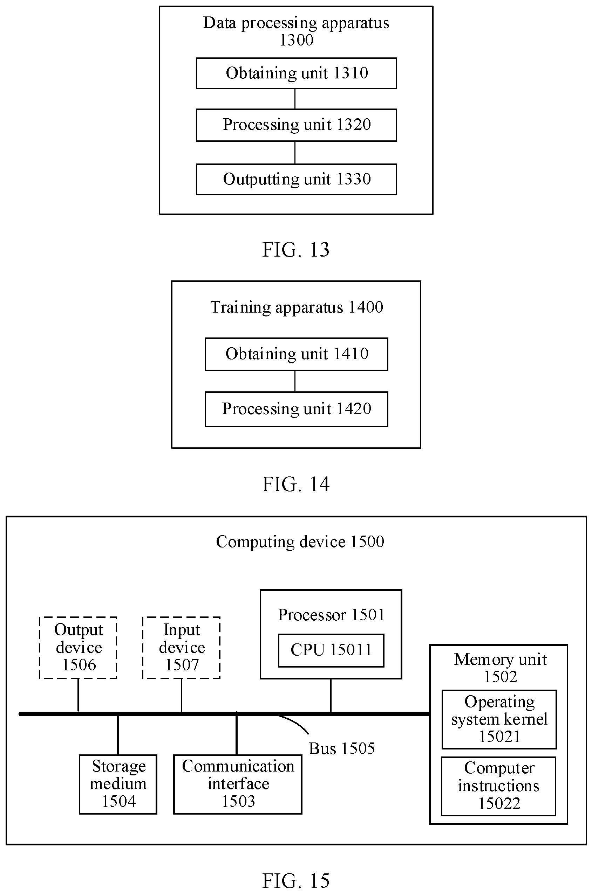

The "<table>", "<tr>", "rowspan=*>", "colspan=*>", "</td>", and the like do not represent an HTML sequence of a specific cell. The "<td></td>" represents an HTML sequence of an empty cell, and bounding box code (also referred to as bounding box coordinates) of a cell corresponding to the HTML sequence of the blank cell is empty (0, 0, 0, 0). The "<td>[]</td>" and "<td" represent an HTML sequence of a non-empty cell, bounding box code corresponding to a text included in the HTML sequence of the non-empty cell is ([x1, y1, x2, y2] □ (0-N)), and values of x1, y1, x2, and y2 are not 0 at the same time. In some possible implementations, a specific position of a bounding box may be determined by using coordinates of the upper left corner of the bounding box and coordinates of the lower right corner of the bounding box. Based on this, "x1, y1" may represent the coordinates of the upper left corner of the bounding box, and "x2, y2" may represent the coordinates of the lower right corner of the bounding box. Optionally, in some other possible implementations, a specific position of a bounding box may be determined by using coordinates of the lower left corner of the bounding box and coordinates of the upper right corner of the bounding box. Based on this, "x1, y1" may represent the coordinates of the lower left corner of the bounding box, and "x2, y2" may represent the coordinates of the upper right corner of the bounding box.

It should be noted that the bounding box corresponding to the text may be any polygon that encloses the text. The polygon is not specifically limited. For example, the polygon may be but is not limited to one of the following polygons: a rectangle, a square, a parallel quadrilateral, or another polygon (for example, a hexagon). For ease of description, in the following embodiments of this application, an example in which "a bounding box corresponding to a text is a rectangular bounding box, and a specific position of the rectangular bounding box is determined by using coordinates of the upper left corner of the rectangular bounding box and coordinates of the lower right corner of the rectangular bounding box" is used for description.

With reference to FIG. 10 to FIG. 12, the following describes another data processing method provided in embodiments of this application. The data processing method shown in FIG. 10 may be a specific example of the data processing method shown in FIG. 8. Specifically, a method 1000 shown in FIG. 10 is described by using an example in which the table image in the method 800 shown in FIG. 8 includes a table (which is shown in Table 1), a table recognition result of the table and a local structure of the table obtained in each round of iteration are marked by using an HTML, and a first bounding box is corrected by using an error correction detection model.

FIG. 10 is a schematic flowchart of a data processing method 1000 according to an embodiment of this application. It may be understood that the method 1000 shown in FIG. 10 may be performed by the data processing model shown in FIG. 6. Specifically, a structure decoder 1 shown in FIG. 10 may be the decoder #1 shown in FIG. 6, and a bounding box decoder 1 shown in FIG. 10 may be the decoder #2 shown in FIG. 6. As shown in FIG. 10, the method 1000 includes step 1010 to step 1080. The following describes step 1010 to step 1080 in detail.

Step 1010: A feature extraction model extracts a feature from a table image to obtain an image feature 1.

A quantity of tables included in the table image is not specifically limited. For example, the table image may include one, two, or five tables. For ease of description, in this embodiment of this application, an example in which the table image in step 1010 includes content shown in Table 1 is used for description.

The image feature 1 indicates one or more of the following features: a quantity of rows of the table 1, a quantity of columns of the table 1, a size of the table 1, a rowspan attribute of the table 1, or a column-span attribute of the table 1.

The feature extraction model is a submodel in a data processing model. The feature extraction model is a neural network model having a feature extraction function, and a structure of the feature extraction model is not specifically limited. For example, the feature extraction model may be a CNN model. For another example, the feature extraction model may alternatively be a combined model including a CNN model and a feature pyramid network (feature pyramid network image, FPN) model.

Optionally, before step 1010, the feature extraction model may be further configured to obtain the table image. For example, a user inputs the table image to the data processing model, so that the feature extraction model obtains the table image.

In this embodiment of this application, the structure decoder 1 may perform i times of iteration processing based on the image feature 1 and an initial input sequence, to obtain a structure feature of the table 1. The structure feature of the table 1 is a partial feature of a global structure of the table 1, and j is a positive integer. The structure feature of the table 1 may include row and column information of the table 1. That the structure decoder 1 performs i times of iteration processing based on the image feature 1 and the initial input sequence includes: During the 1 st time of iteration processing, the structure decoder 1 processes the image feature 1 and the initial input sequence. During the (i+1)$^{th}$ time of iteration processing, the structure decoder 1 processes the image feature 1, the initial input sequence, and an output result obtained after the i$^{th}$ time of iteration processing, to obtain an output result of the (i+1)$^{th}$ time of iteration processing. The following describes in detail, with reference to step 1020, step 1030, and step 1040, a processing process in which the structure decoder 1 performs the first iteration to the third iteration. For example, (1) in FIG. 11 shows a procedure in which the structure decoder 1 performs the 1$^{st}$ time of iteration processing based on the image feature 1, sequence positional encoding, and the initial input sequence, and a predicted structure sequence 1 is an output result of the 1$^{st}$ time of iteration processing. (2) in FIG. 11 shows a procedure in which the structure decoder 2 performs the 2$^{nd}$ time of iteration processing, and a predicted structure sequence 2 is an output result of the 2$^{nd}$ time of iteration processing. (3) in FIG. 11 shows a procedure in which the structure decoder 2 performs the 3$^{rd}$ time of iteration processing, and a predicted structure sequence 3 is an output result of the 3$^{rd}$ time of iteration processing.

Step 1020: The structure decoder 1 processes the image feature 1, the initial input sequence, and an initial bounding box, to obtain the predicted structure sequence 1, where the predicted structure sequence 1 indicates an HTML sequence 1 that is not a non-empty cell.

The initial input sequence may include a sequence indicating a start of an HTML sequence used to mark the table 1, and in this case, the initial bounding box is empty. It may be understood that the predicted structure sequence 1 includes the HTML sequence 1 indicating that a cell is not a non-empty cell. In this case, the predicted structure sequence 1 does not include the bounding box information, in other words, the bounding box information included in the predicted structure sequence 1 is empty. For example, (1) in FIG. 11 shows an initial input sequence, an initial bounding box, and a predicted structure sequence 1. The predicted structure sequence 1 is "<table>", and the "<table>" indicates an HTML sequence 1 that is not a non-empty cell.

That the structure decoder 1 processes the image feature 1, the initial input sequence, and the initial bounding box, to obtain a recognition result 1 includes: The structure decoder 1 processes the image feature 1, the initial input sequence, and the initial bounding box, to obtain an output result of the structure decoder 1. The structure decoder 1 linearizes the output result to obtain sequence information 1, where the sequence information 1 indicates the predicted structure sequence 1. The structure decoder 1 processes the sequence information 1 by using a normalized exponential function softmax, to obtain the predicted structure sequence 1. Optionally, in some implementations, that the structure decoder 1 processes the image feature 1, the initial input sequence, and the initial bounding box, to obtain an output result of the structure decoder 1 includes: The structure decoder 1 processes the image feature 1, the initial input sequence, initial sequence positional encoding, and the initial bounding box, to obtain the output result of the structure decoder 1. The initial sequence positional encoding indicates a position of the initial input sequence in the table 1. For example, (1) in FIG. 11 shows the initial sequence positional encoding.

The following uses an example in which the structure decoder 1 in this embodiment of this application is of the structure shown in FIG. 7 to specifically describe a procedure in which the structure decoder 1 is configured to process the image feature 1, the initial input sequence, the initial sequence positional encoding, and the initial bounding box, to obtain the output result of the structure decoder 1.

In this embodiment of this application, an input of a masked multi-head attention layer of a residual branch 1 includes V1, K1, and Q1. V1 is a value (value) vector obtained through processing based on a target vector 1, K1 is a key (key) vector obtained through processing based on the target vector 1, and Q1 is a query (query) vector obtained through processing based on the target vector 1. The target vector 1 is obtained by performing addition processing on the initial input sequence, the initial bounding box, and the positional encoding 1. An output of the masked multi-head attention layer is a result obtained by performing a point multiplication operation on V1, K1, and Q1, and the point multiplication operation may be represented by using the following formula 1:

$$\text{Attention}\left(Q1, K1, V1\right) = \text{softmax}\left(\frac{Q1 \times K1^{T}}{\sqrt{d_{k1}}}\right) \times V1 \qquad \text{Formula 1}$$

Attention(Q1,K1,V1) represents an output result of the masked multi-head attention layer, and $d_{k1}$ represents a dimension of the K1 vector.

Then, addition and normalization processing is performed on the output of the masked multi-head attention layer, to obtain an output of the residual branch 1.

In this embodiment of this application, an input of a multi-head attention layer of a residual branch 2 includes V2, K2, and Q2. V2 is a value (value) vector obtained through processing based on an image feature 1, K2 is a key (key) vector obtained through processing based on the image feature 1, and Q2 is a query (query) vector obtained through processing based on a target vector 2. The target vector 2 is a query vector obtained by processing the output result of the residual branch 1. An output of the multi-head attention layer is a result obtained by performing a point multiplication operation on V2, K2, and Q2, and the point multiplication operation may be represented by using the following formula 2:

$$\text{Attention}\left(Q2, K2, V2\right) = \text{softmax}\left(\frac{Q2 \times K2^{T}}{\sqrt{d_{k2}}}\right) \times V2 \qquad \text{Formula 2}$$

Attention(Q2, K2, V2) represents an output result of the masked multi-head attention layer, and $d_{k2}$ represents a dimension of K2.

Then, addition and normalization processing is performed on the output of the multi-head attention layer, to obtain an output of the residual branch 2.

In this embodiment of this application, an input of the feedforward neural network FFN layer of a residual branch 3 includes the output result of the residual branch 2. The feedforward neural network FFN layer performs the following operations on the output result of the residual branch 2: linear transformation and linear rectification function (linear rectification function, ReLU) processing.

Step 1030: The structure decoder 1 processes the image feature 1, an input sequence 1, and a bounding box 1, to obtain the predicted structure sequence 2, where the predicted structure sequence 2 indicates an HTML sequence 2 that is not a non-empty cell.

The input sequence 1 includes an HTML sequence indicating a local structure 2 of the table 1, where the local structure 2 is a partial structure in the global structure of the table 1, and the local structure 2 includes a local structure 1 and the predicted structure sequence 1. For example, (2) in FIG. 11 shows the input sequence 1.

The bounding box 1 indicates a position of a text included in a cell corresponding to the local structure 2. For example, (2) in FIG. 11 shows that the bounding box 1 includes $Box_{\phi}$ and $Box_{\phi}$. Sequence positional encoding 1 shown in (2) in FIG. 11 indicates a position of the input sequence 1 in the table 1.

The predicted structure sequence 2 indicates the HTML sequence 2 that is not a non-empty cell, and in this case, the predicted structure sequence 2 does not include bounding box information. For example, (2) in FIG. 11 shows the predicted structure sequence 2, and "<tr>" indicates the HTML sequence 2 that is not a non-empty cell.

It may be understood that an execution principle of step 1030 is the same as an execution principle of step 1020, except that input data and output data of the structure decoder 1 are different. Details are not described herein again. For details, refer to related descriptions in step 1020. For example, (2) in FIG. 11 shows an execution procedure of step 1030.

Step 1040: The structure decoder 1 processes the image feature 1, an input sequence 2, and a bounding box 2, to obtain the predicted structure sequence 3, where the predicted structure sequence 3 includes an HTML sequence 3 indicating a non-empty cell 1.

The input sequence 2 includes an HTML sequence indicating a local structure 3 of the table 1, where the local structure 3 is a partial structure in the global structure of the table 1, and the local structure 3 includes the local structure 1 and the predicted structure sequence 2. For example, (3) in FIG. 11 shows the input sequence 2.

The bounding box 2 indicates a position of a text included in a cell corresponding to the local structure 3. For example, (3) in FIG. 11 shows that the bounding box 2 includes: $Box_{\phi}$, $Box_{\phi}$, and $Box_{\phi}$. Sequence positional encoding 2 shown in (3) in FIG. 11 indicates a position of the input sequence 2 in the table 1.

The predicted structure sequence 3 includes the HTML sequence 3 indicating the non-empty cell 1. In this case, the predicted structure sequence 3 may include a bounding box #1, where the bounding box #1 is a bounding box corresponding to a text in the non-empty cell 1 . For example, (3) in FIG. 11 shows the predicted structure sequence 3, and "<td" is the HTML sequence 3 indicating the non-empty cell 1. It may be understood that, when a text shape in the non-empty cell 1 is a rectangle, the bounding box #1 may be the rectangle.

It may be understood that an execution principle of step 1040 is the same as an execution principle of step 1020, except that the input data and output data of the structure decoder 1 are different. Details are not described herein again. For details, refer to related descriptions in step 1020. For example, (3) in FIG. 11 shows an execution procedure of step 1040.

Step 1050: The bounding box decoder 1 processes the image feature 1 and HTML sequence information of the non-empty cell 1, to obtain a position of the bounding box #1 in the table 1. The HTML sequence information of the non-empty cell 1 indicates the HTML sequence 3 of the non-empty cell 1, sequence information 3 includes the HTML sequence information of the non-empty cell 1, and the sequence information 3 indicates the predicted structure sequence 3.

A position in which the bounding box #1 is located in the table 1 is a position in which the text in the non-empty cell 1 is located in the table 1. For example, when the bounding box #1 is a rectangle, the position of the bounding box #1 in the table 1 may be described by using coordinates of the upper left corner of the rectangle and coordinates of the lower right corner of the rectangle. For example, (3) in FIG. 11 shows the sequence information 3, the predicted structure sequence 3, the HTML sequence information of the non-empty cell 1, and the HTML sequence 3 of the non-empty cell 1.

In step 1050, that the bounding box decoder 1 processes the image feature 1 and the HTML sequence information of the non-empty cell 1, to obtain the position of the bounding box #1 in the table 1 includes: The bounding box decoder performs j times of iteration processing based on the image feature 1 and the HTML sequence information of the non-empty cell 1, to obtain the position of the bounding box #1 in the table 1, where j is a positive integer. That the bounding box decoder 1 performs j times of iteration processing based on the image feature 1 and the HTML sequence information of the non-empty cell 1 includes: During the 1st time of iteration processing, the bounding box decoder 1 processes the image feature 1 and the HTML sequence information of the non-empty cell 1, to obtain an output result of the 1st time of iteration processing. During the $(j+1)^{th}$ time of iteration processing, the bounding box decoder 1 processes the image feature 1, the HTML sequence information of the non-empty cell 1, and an output result of the $j^{th}$ time of iteration processing, to obtain an output result of the $(j+1)^{th}$ time of iteration processing. For example, FIG. 12 shows a procedure in which the bounding box decoder 1 performs four (namely, j=4) times of iteration processing based on the image feature 1 and the HTML sequence information of the non-empty cell 1. It may be understood that, when the bounding box decoder 1 may determine, based on a processing result obtained after j times of iterations, the position of the bounding box #1 in the table 1, the bounding box decoder 1 may stop iterating. A procedure of performing each iteration by the bounding box decoder 1 is the same as the execution procedure of the structure decoder 1 described in step 1020, except that input data and output data of the decoders are different. Details are not described herein again. For details, refer to related descriptions in step 1020.

That step 1050 is performed after step 1040 may be understood as follows: When a predicted structure sequence (for example, the predicted structure sequence 3) output by the structure decoder 1 indicates a non-empty cell, the bounding box decoder 1 is further triggered to predict, based on the predicted structure sequence, a position of a bounding box included in the predicted structure sequence in the table 1.

Step 1060: Determine whether a matching degree between the bounding box #1 and a bounding box #2 is greater than or equal to a preset threshold.

Step 1060 may be performed by the data processing model.

The bounding box #2 may include a bounding box obtained by correcting the local structure 3 by the error correction detection model. The error correction detection model is a trained artificial intelligence AI model. Optionally, the data processing model may further include the error correction detection model.

The determining whether the matching degree between the bounding box #1 and the bounding box #2 is greater than or equal to the preset threshold includes: when determining that the matching degree between the bounding box #1 and the bounding box #2 is greater than or equal to the preset threshold, performing step 1070 after step 1060; or when determining that the matching degree between the bounding box #1 and the bounding box #2 is less than the preset threshold, performing step 1080 after step 1060. A method for determining the matching degree between the bounding box #1 and the bounding box #2 is not specifically limited. For example, the matching degree may be determined in any one of the following manners: determining based on an intersection-over-union (intersection-over-union, IoU) for matching, or determining based on a distance between center points. For example, when the matching degree is determined based on the IoU, a larger IoU indicates a larger matching degree. For another example, when the matching degree is determined based on the distance between central points, a smaller distance indicates a larger matching degree. A value of the preset threshold is not specifically limited, and the value of the preset threshold may be set based on an actual need.

Step 1070: The structure decoder 1 corrects the bounding box 2 in step 1040 to the bounding box #2, and processes the image feature 1, the input sequence 2, and the bounding box #2, to obtain a predicted structure sequence 4, where the predicted structure sequence 4 includes an HTML sequence 4 indicating the non-empty cell 1.

The predicted structure sequence 4 includes the HTML sequence 4 indicating the non-empty cell 1. In this case, the predicted structure sequence 4 includes the bounding box #2, the bounding box #2 is a bounding box corresponding to a text in the non-empty cell 1, and the bounding box #2 is different from the bounding box #1.

It may be understood that an execution principle of step 1070 is the same as an execution principle of step 1020, except that the input data and output data of the structure decoder 1 are different. Details are not described herein again. For details, refer to related descriptions in step 1020.

Step 1080: The structure decoder 1 processes the image feature 1, an input sequence 3, and the bounding box # 1, to obtain a predicted structure sequence 5, where the predicted structure sequence 5 includes an HTML sequence 5 indicating a non-empty cell 2.

The input sequence 3 includes an HTML sequence indicating a local structure 4 of the table 1, where the local structure 4 is a partial structure in the global structure of the table 1, and the local structure 4 includes the local structure 1 and the predicted structure sequence 3.

It may be understood that, when it is determined that the matching degree between the bounding box #1 and the bounding box #2 is less than the preset threshold, step 1080 is performed after step 1060. That the matching degree between the bounding box #1 and the bounding box #2 is determined to be less than the preset threshold may be understood as that the bounding box #1 obtained in step 1050 is accurate. Based on this, in step 1080, the structure of the table 1 may be further determined based on the predicted structure sequence 3 obtained in step 1050.

An execution principle of step 1080 is the same as an execution principle of step 1020, except that the input data and output data of the structure decoder 1 are different. Details are not described herein again. For details, refer to related descriptions in step 1020.

An execution sequence of step 1070 and step 1080 is not specifically limited. For example, after step 1060, step 1070 may be performed first, and then step 1080 may be performed. For another example, after step 1060, step 1080 may be performed first, and then step 1070 may be performed.

In the foregoing implementation, the structure decoder 1 and the bounding box decoder 1 each need to perform iteration processing for a plurality of times to obtain the global structure of the table 1. The global structure may include row and column information of the table 1 and a bounding box corresponding to a text in each non-empty cell in the table 1.

Optionally, after the data processing model obtains the global structure of the table 1 based on the foregoing method, the data processing model may further perform the following step: obtaining, based on the global structure of the table 1, text content included in the global structure. A manner of obtaining, based on the global structure of the table, the text content included in the global structure is not specifically limited. For example, based on a text bounding box in the global structure, a cell image corresponding to the text bounding box may be captured. The cell image is recognized by using an optical character recognition (optical character recognition, OCR) system, to obtain text content included in the cell image.

Optionally, the HTML sequence in this embodiment of this application may be equivalently converted into an extensible markup language (extensible markup language, XML) sequence and a LaTex LaTex sequence.

It should be understood that the method shown in FIG. 10 is merely an example, and does not constitute any limitation on the data processing method provided in embodiments of this application.

With reference to FIG. 5 to FIG. 12, the foregoing describes in detail the system architecture and the data processing model to which embodiments of this application are applicable, and the data processing method and the data processing model training method that are provided in embodiments of this application. The following describes in detail apparatus embodiments in this application with reference to FIG. 13 to FIG. 15. The descriptions of the method embodiments correspond to descriptions of the apparatus embodiments. Therefore, for a part that is not described in detail, refer to the foregoing method embodiments.

FIG. 13 is a schematic diagram of a structure of a data processing apparatus 1300 according to an embodiment of this application. The data processing apparatus 1300 shown in FIG. 13 may perform corresponding steps in the foregoing data processing method. As shown in FIG. 13, the data processing apparatus 1300 includes an obtaining unit 1310, a processing unit 1320, and an outputting unit 1330.

The obtaining unit 1310 is configured to obtain a to-be-processed table image. The processing unit 1320 is configured to determine a table recognition result based on the table image and a generative table recognition policy. The generative table recognition policy indicates to determine the table recognition result of the table image by using a markup language and a non-overlapping attribute of a bounding box. The bounding box indicates a position of a text included in a cell in a table associated with the table image, and the table recognition result indicates a global structure and content that are included in the table. The outputting unit 1330 is configured to output the table recognition result.

Optionally, in some possible designs, the non-overlapping attribute of the bounding box indicates that areas corresponding to all cells included in the table do not overlap.

Optionally, in some other possible designs, the processing unit 1320 is further configured to obtain the table recognition result through iteration processing based on a table image feature and the markup language.

Optionally, in some other possible designs, the iteration processing includes a plurality of rounds of iterations, and the processing unit 1320 is further configured to: determine, based on the table image feature and the markup language, a first bounding box and a local structure that are obtained through a first iteration, where the first iteration is a processing process of any one of the plurality of rounds of iterations, the first bounding box indicates a bounding box of the local structure obtained through the first iteration, and the local structure is a partial structure of the global structure; and determine, when the global structure is obtained through a second iteration, that a processing result obtained through the second iteration is the table recognition result, where the second iteration is one time of iteration processing that is in the iteration processing and that is performed after the first iteration processing, and the processing result includes the global structure and the content.

Optionally, in some other possible designs, the processing unit 1320 is further configured to correct the first bounding box obtained through the first iteration.

Optionally, in some other possible designs, the processing unit 1320 is further configured to correct the first bounding box based on an input parameter and the table image.

Optionally, in some other possible designs, the processing unit 1320 is further configured to correct, when a matching degree between a second bounding box and the first bounding box is greater than or equal to a preset threshold, the first bounding box based on the second bounding box, where the second bounding box is obtained by processing the local structure by an error correction detection model, where the error correction detection model is a trained artificial intelligence AI model.

Optionally, in some other possible designs, the processing unit 1320 is further configured to correct the table recognition result based on the table image, and output a corrected table recognition result.

Optionally, in some other possible designs, the processing unit 1320 is further configured to perform feature extraction on the table image to obtain the table image feature.

Optionally, in some other possible designs, the table recognition result is identified by using any one of the following markup languages: a hypertext markup language HTML, an extensible markup language XML, or LaTex LaTeX.

It should be understood that the apparatus 1300 in this embodiment of this application may be implemented by using a central processing unit (central processing unit, CPU), may be implemented by using an application-specific integrated circuit (application-specific integrated circuit, ASIC), or may be implemented by using a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. When the data processing method is implemented by using software, the apparatus 1300 and units and modules of the apparatus 1300 may alternatively be software modules.

FIG. 14 is a schematic diagram of a structure of a training apparatus 1400 according to an embodiment of this application. The training apparatus 1400 shown in FIG. 14 may perform corresponding steps in the data processing model training method. As shown in FIG. 14, the training apparatus 1400 includes an obtaining unit 1410 and a processing unit 1420.

The obtaining unit 1410 is configured to perform step 910. The processing unit 1420 is configured to perform step 920, step 930, and step 940.

Optionally, the training apparatus 1400 may further include an outputting unit. The outputting unit 1430 is configured to output a trained target model obtained in step 940.

It should be understood that the apparatus 1400 in this embodiment of this application may be implemented by using a central processing unit (central processing unit, CPU), may be implemented by using an application-specific integrated circuit (application-specific integrated circuit, ASIC), an artificial intelligence chip, a system-on-a-chip (system-on-chip, SoC), an accelerator card, or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. When the data processing model training method is implemented by using software, the apparatus 1400 and units and modules of the apparatus 1400 may alternatively be software modules.

It should be noted that the apparatus 1300 and the apparatus 1400 each are embodied in a form of function units. The term "unit" herein may be implemented in a form of software and/or hardware. This is not specifically limited.

For example, the "unit" may be a software program, a hardware circuit, or a combination thereof that implements the foregoing functions. The hardware circuit may include an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

Therefore, the units in the example described in this embodiment of this application can be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

FIG. 15 is a schematic diagram of a structure of a computing device 1500 according to an embodiment of this application. The computing device 1500 may be a server, an edge server, a computer workstation, or another device having a computing capability. The computing device 1500 may include at least one processor 1501, a memory unit 1502, a communication interface 1503, and a storage medium 1504. Refer to solid lines in FIG. 15. Optionally, the computing device 1500 may further include an output device 1506 and an input device 1507. Refer to dashed lines in FIG. 15. The processor 1501, the memory unit 1502, the communication interface 1503, the storage medium 1504, the output device 1506, and the input device 1507 communicate with each other via the bus 1505, or may communicate with each other in another manner, for example, through wireless transmission.

In some implementations, the computing device 1500 may be configured to implement a same or similar function of the data processing apparatus 1300. In this case, the memory unit 1502 is configured to store computer instructions 15022, and the processor 1501 may invoke the computer instructions 15022 stored in the memory unit 1502 to perform the steps of the method performed by the data processing model in the foregoing method embodiments.

In some other implementations, functions of the computing device 1500 are the same as or similar to the functions of the training apparatus 1400. In this case, the memory unit 1502 is configured to store the computer instructions 15022, and the processor 1501 may invoke the computer instructions 15022 stored in the memory unit 1502 to perform the steps of the foregoing training method.

It should be understood that, in this embodiment of this application, the processor 1501 may include at least one CPU 15011. The processor 1501 may alternatively be another general-purpose processor, a digital signal processor (digital signal processing, DSP), an application-specific integrated circuit (ASIC), a field-programmable gate array (FPGA), an artificial intelligence AI chip, a system-on-a-chip SoC or another programmable logic device, a discrete gate or transistor logic device, a discrete hardware component, or the like. The general-purpose processor may be a microprocessor, any conventional processor, or the like. Optionally, the processor 1501 includes two or more different types of processors. For example, the processor 1501 includes the CPU 15011 and at least one of a general-purpose processor, a digital signal processor DSP, an application-specific integrated circuit ASIC, a field-programmable gate array FPGA, an artificial intelligence AI chip, a system-on-a-chip SoC or another programmable logic device, a discrete gate or transistor logic device, or a discrete hardware component.

The memory unit 1502 may include a read-only memory and a random access memory, and provide instructions and data for the processor 1501. The memory unit 1502 may further include a non-volatile random access memory. For example, the memory unit 1502 may further include information that stores a device type.

The memory unit 1502 may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication interface 1503 uses a transceiver apparatus such as but not limited to a transceiver, to implement communication between the computing device 1500 and another device or a communication network. For example, when the processor 1501 may invoke the computer instructions 15022 stored in the memory unit 1502 to perform the steps of the method performed by the data processing model in the foregoing method embodiments, the table image or the data processing model may be obtained through the communication interface 1503. For another example, when the processor 1501 may invoke the computer instructions 15022 stored in the memory unit 1502 to perform the steps of the foregoing training method, the training dataset may be obtained through the communication interface 1603.

The storage medium 1504 has a storage function. The storage medium 1504 may be configured to temporarily store operation data in the processor 1501 and data exchanged with an external memory. The storage medium 1504 may be but is not limited to a hard disk drive (hard disk drive, HDD).

In addition to a data bus, the bus 1505 may further include a power bus, a control bus, a status signal bus, and the like. However, for clear description, various buses are all marked as the bus 1505 in FIG. 15.

The bus 1505 may be a peripheral component interconnect express (Peripheral Component Interconnect Express, PCIe) bus, an extended industry standard architecture (extended industry standard architecture, EISA) bus, a unified bus (unified bus, Ubus, or UB), a computer express link (compute express link, CXL), a cache coherent interconnect for accelerators (cache coherent interconnect for accelerators, CCIX), or the like. The bus 1505 can be divided into an address bus, a data bus, a control bus, and the like.

The output device 1506 may be any one of the following: a keyboard, a WordPad, a microphone, a stereo, or a display.

The input device 1507 may be any one of the following: a keyboard, a mouse, a camera, a scanner, a handwriting input board, or a voice input apparatus.

Optionally, in some other implementations, the steps of the method performed by the data processing model in the foregoing method embodiments may be implemented based on a plurality of computing devices 1500, or the steps of the training method may be implemented based on a plurality of computing devices 1500. The plurality of computing devices 1500 may be apparatuses included in a computer cluster. For example, an example in which the computer cluster includes two computing devices 1500, and the two computing devices 1500 are configured to perform the method performed by the data processing model in the foregoing method embodiments is used for description. For ease of description, the two computing devices 1500 are respectively denoted as an apparatus #1 and an apparatus #2. For structures of the apparatus #1 and the apparatus #2, refer to FIG. 15. The apparatus #1 and the apparatus #2 may perform communication by using the Ethernet to implement data transmission, but this is not limited. During specific implementation, the memory unit included in the apparatus #1 may provide, by using the Ethernet, instructions and data to the processor included in the apparatus #2, so that the processor included in the apparatus #2 may invoke, by using the Ethernet, computer instructions stored in the memory unit included in the apparatus #1, to perform the steps of the method performed by the data processing model in the foregoing method embodiments.

The foregoing listed structure of the computing device 1500 is merely an example for description, and this application is not limited thereto. The computing device 1500 in this embodiment of this application includes various hardware in a computer system in the conventional technology. A person skilled in the art should understand that the computing device 1500 may further include another component required for implementing normal running. In addition, based on a specific need, the person skilled in the art should understand that the computing device 1500 may further include a hardware component for implementing another additional function.

This application further provides a data processing system. The system includes a plurality of computing devices 1500 shown in FIG. 15. The plurality of computing devices 1500 form the data processing system in a cluster form. The system is configured to implement functions of the operation steps in the data processing method.

An embodiment of this application provides a computer program product. The computer program product includes computer program code. When the computer program code is run on a computer, the computer is enabled to perform the data processing method.

An embodiment of this application provides a computer program product, and the computer program product is provided. The computer program product includes computer program code. When the computer program code is run on a computer, the computer is enabled to perform the data processing model training method.

An embodiment of this application provides a computer-readable storage medium, configured to store a computer program, where the computer program is configured to perform the method in the foregoing method embodiment.

An embodiment of this application provides a chip system, including at least one processor and an interface. The at least one processor is configured to invoke and run a computer program, to enable the chip system to perform the method in the foregoing method embodiment.

All or a part of the foregoing embodiments may be implemented by using software, hardware, firmware, or any combination thereof. When the software is used to implement the embodiments, all or a part of the foregoing embodiments may be implemented in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

**Claims**

1. A data processing method, wherein the method comprises:

   obtaining a to-be-processed table image;
   determining a table recognition result based on the table image and a generative table recognition policy, wherein the generative table recognition policy indicates to determine the table recognition result of the table image by using a markup language and a non-overlapping attribute of a bounding box, wherein the bounding box indicates a position of a text comprised in a cell in a table associated with the table image, and the table recognition result indicates a global structure and content that are comprised in the table; and
   outputting the table recognition result.

2. The method according to claim 1, wherein the non-overlapping attribute of the bounding box indicates that areas corresponding to all cells comprised in the table do not overlap.

3. The method according to claim 1, wherein the determining a table recognition result based on the table image and a generative table recognition policy comprises:
obtaining the table recognition result through iteration processing based on a table image feature and the markup language.

4. The method according to claim 3, wherein the iteration processing comprises a plurality of rounds of iterations, and the method further comprises:

   determining, based on the table image feature and the markup language, a first bounding box and a local structure that are obtained through a first iteration, wherein the first iteration is a processing process of any one of the plurality of rounds of iterations, the first bounding box indicates a bounding box of the local structure obtained through the first iteration, and the local structure is a partial structure of the global structure; and
   determining, when the global structure is obtained through a second iteration, that a processing result obtained through the second iteration is the table recognition result, wherein the second iteration is one time of iteration processing that is in the iteration processing and that is performed after the first iteration processing, and the processing result comprises the global structure and the content.

5. The method according to claim 4, wherein the method further comprises:
correcting the first bounding box obtained through the first iteration.

6. The method according to claim 5, wherein the correcting the first bounding box obtained through the first iteration comprises:
correcting the first bounding box based on an input parameter and the table image.

7. The method according to claim 5, wherein the correcting the first bounding box obtained through the first iteration comprises:
correcting, when a matching degree between a second bounding box and the first bounding box is greater than or equal to a preset threshold, the first bounding box based on the second bounding box, wherein the second bounding box is obtained by processing the local structure by an error correction detection model, wherein the error correction detection model is a trained artificial intelligence AI model.

8. The method according to any one of claims 1 to 7, wherein the method further comprises:
correcting the table recognition result based on the table image, and outputting a corrected table recognition result.

9. The method according to any one of claims 1 to 8, wherein the method further comprises:
performing feature extraction on the table image to obtain the table image feature.

10. The method according to any one of claims 1 to 9, wherein
the table recognition result is identified by using any one of the following markup languages: a hypertext markup language HTML, an extensible markup language XML, or LaTex LaTex.

11. A data processing apparatus, wherein the apparatus comprises an obtaining unit, a processing unit, and an outputting unit, wherein

   the obtaining unit is configured to obtain a to-be-processed table image;
   the processing unit is configured to determine a table recognition result based on the table image and a generative table recognition policy, wherein the generative table recognition policy indicates to determine the table recognition result of the table image by using a markup language and a non-overlapping attribute of a bounding box, wherein the bounding box indicates a position of a text comprised in a cell in a table associated with the table image, and the table recognition result indicates a global structure and content that are comprised in the table; and
   the outputting unit is configured to output the table recognition result.

12. The apparatus according to claim 11, wherein
the non-overlapping attribute of the bounding box indicates that areas corresponding to all cells comprised in the table do not overlap.

**13.** The apparatus according to claim 11, wherein the processing unit is further configured to:
obtain the table recognition result through iteration processing based on a table image feature and the markup language.

**14.** The apparatus according to claim 13, wherein the iteration processing comprises a plurality of rounds of iterations, and the processing unit is further configured to:

determine, based on the table image feature and the markup language, a first bounding box and a local structure that are obtained through a first iteration, wherein the first iteration is a processing process of any one of the plurality of rounds of iterations, the first bounding box indicates a bounding box of the local structure obtained through the first iteration, and the local structure is a partial structure of the global structure; and
determine, when the global structure is obtained through a second iteration, that a processing result obtained through the second iteration is the table recognition result, wherein the second iteration is one time of iteration processing that is in the iteration processing and that is performed after the first iteration processing, and the processing result comprises the global structure and the content.

**15.** The apparatus according to claim 14, wherein the processing unit is further configured to:
correct the first bounding box obtained through the first iteration.

**16.** The apparatus according to claim 15, wherein the processing unit is further configured to:
correct the first bounding box based on an input parameter and the table image.

**17.** The apparatus according to claim 15, wherein the processing unit is further configured to:
correct, when a matching degree between a second bounding box and the first bounding box is greater than or equal to a preset threshold, the first bounding box based on the second bounding box, wherein the second bounding box is obtained by processing the local structure by an error correction detection model, wherein the error correction detection model is a trained artificial intelligence AI model.

**18.** The apparatus according to any one of claims 11 to 17, wherein the processing unit is further configured to:
correct the table recognition result based on the table image, and output a corrected table recognition result.

**19.** The apparatus according to any one of claims 11 to 18, wherein the processing unit is further configured to:
perform feature extraction on the table image to obtain the table image feature.

**20.** The apparatus according to any one of claims 11 to 19, wherein
the table recognition result is identified by using any one of the following markup languages: a hypertext markup language HTML, an extensible markup language XML, or LaTex LaTex.

**21.** A data processing chip, wherein the chip comprises a logic circuit, and the logic circuit performs the method according to any one of claims 1 to 10.

**22.** A data processing system, wherein the system comprises a processor, and the processor is configured to perform the method according to any one of claims 1 to 10.

**23.** A computer-readable storage medium, comprising computer-readable instructions, wherein when the computer-readable instructions are run on a computer device, the computer device is enabled to perform the method according to any one of claims 1 to 10.

FIG. 1

Output

Linear layer

Linear layer

Decoder 220

Addition and normalization

Decoding submodule

Feedforward neural network

Addition and normalization

Multi-head self-attention layer

Encoder 210

Encoding submodule

Addition and normalization

Feedforward neural network

Addition and normalization

Multi-head self-attention layer

Addition and normalization

Multi-head self-attention layer

Positional encoding        Sum

Input

Sum        Positional encoding

Input

FIG. 2

| Output layer 240 |
|---|
| Hidden layer n (23n) |
| Hidden layer 2 (232) |
| Hidden layer 1 (231) |

Fully connected layer 230

Convolutional neural network (CNN) 200

| 226 |
|---|
| 225 |
| 224 |
| 223 |
| 222 |
| 221 |

Convolution layer/ Pooling layer 220

Input layer 210

| Input layer 210 |
|---|

| To-be-processed data |
|---|

FIG. 3

Output layer 240

Fully
connected
layer
230

Hidden layer n (23n)

Hidden layer 2 (232)

Hidden layer 1 (231)

Convolution
layer/
Pooling
layer
220

| 226 | 226 |
| 225 | 225 |
| 224 | 224 |
| 223 | 223 |
| 222 | 222 |
| 221 | 221 |

Convolutional
neural
network
(CNN)
200

Input layer
210

Input layer 210

To-be-
processed
data

FIG. 4

System architecture 500

Data collection
device 560

Data flow

Database
530

Data
flow

Training device
520

Execution device
510

Target model/
rule 501

Computing
module 511

Data storage
system 550

Customer
device
540

Input
data

Output
result

Data
processing
system 512

Preprocessing
module 513

Preprocessing
module 514

FIG. 5

FIG. 6

FIG. 7

Method 800

| | |
|---|---|
| Obtain a to-be-processed table image | 810 |

| | |
|---|---|
| Determine a table recognition result based on the table image and a generative table recognition policy, where the generative table recognition policy indicates to determine the table recognition result of the table image by using a markup language and a non-overlapping attribute of a bounding box, the bounding box indicates a location of a text included in a cell in a table associated with the table image, and the table recognition result indicates a global structure and content that are included in the table | 820 |

| | |
|---|---|
| Output the table recognition result | 830 |

FIG. 8

Method 900

| | |
|---|---|
| Obtain a plurality of training data sets and annotation information corresponding to each training data set | 910 |

| | |
|---|---|
| Input the training data set into a target model, where the target model processes the training data set to obtain training output information corresponding to the training data set | 920 |

| | |
|---|---|
| Adjust a parameter of the target model based on the annotation information and the training output information, to minimize a difference between the training output information and the annotation information | 930 |

| | |
|---|---|
| Continue to perform step 920 and step 930 by using an adjusted parameter value until an obtained loss value gradually converges, in other words, a trained target model is obtained | 940 |

FIG. 9a

①

Year (Year)

Stock options (Stock Options) ②

| | Vested during the year (Vested During the year) ③ | Fair value (Fair Value) ④ |
|---|---|---|
| 2018 ⑤ | 2465493 ⑥ | 112 USD ⑦ |
| 2017 ⑧ | 2427843 ⑨ | 104 USD ⑩ |
| 2016 ⑪ | 2572129 ⑫ | 98 USD ⑬ |

FIG. 9b

Method 1000

A feature extraction model extracts a feature from a table image, to obtain an image feature 1 — 1010

A structure decoder 1 processes the image feature 1, an initial input sequence, and an initial bounding box, to obtain a predicted structure sequence 1, where the predicted structure sequence 1 indicates an HTML sequence 1 that is not a non-empty cell — 1020

The structure decoder 1 processes the image feature 1, an input sequence 1, and a bounding box 1, to obtain a predicted structure sequence 2, where the predicted structure sequence 2 indicates an HTML sequence 2 that is not a non-empty cell — 1030

The structure decoder 1 processes the image feature 1, an input sequence 2, and a bounding box 2, to obtain a predicted structure sequence 3, where the predicted structure sequence 3 includes an HTML sequence 3 indicating a non-empty cell 1 — 1040

A bounding box decoder 1 processes the image feature 1 and HTML sequence information of the non-empty cell 1, to obtain a location of a bounding box # 1 in a table 1, where the HTML sequence information of the non-empty cell 1 indicates the HTML sequence 3 of the non-empty cell 1, sequence information 3 includes the HTML sequence information of the non-empty cell 1, and the sequence information 3 indicates the predicted structure sequence 3 — 1050

Determine whether a matching degree between the bounding box #1 and a bounding box #2 is greater than or equal to a preset threshold — 1060

No

Yes

The structure decoder 1 corrects the bounding box 2 in step 1040 to the bounding box #2, and processes the image feature 1, the input sequence 2, and the bounding box #2, to obtain a predicted structure sequence 4, where the predicted structure sequence 4 includes an HTML sequence 4 indicating the non-empty cell 1 — 1070

The structure decoder 1 processes the image feature 1, an input sequence 3, and the bounding box # 1, to obtain a predicted structure sequence 5, where the predicted structure sequence 5 includes an HTML sequence 5 indicating a non-empty cell 2 — 1080

FIG. 10

Predicted structure
sequence 1 | <table>

softmax

Sequence
information 1

Linearization

Positional
encoding

Image
feature 1

Sum

Structure
decoder 1

Initial input
sequence
Sequence
positional
encoding 1
Initial
bounding box

<SOS>
+
0
+
Box$_\phi$

(1)

Predicted structure
sequence 2 | <table> | <tr>

softmax

Sequence
information 2

Positional
encoding

Linearization

Image
feature 1

Sum

Structure
decoder 1

Input
sequence 1
Sequence
positional
encoding 2
Bounding
box 1

<SOS> | <table>
+ | +
0 | 1
+ | +
Box$_\phi$ | Box$_\phi$

(2)

Predicted structure
sequence 3 | <table> | <tr> | <td

HTML sequence 3 of the
non-empty cell 1

softmax

Sequence
information 3

HTML sequence information
of a non-empty cell 1

Linearization

Positional
encoding

Image
feature 1

Sum

Structure
decoder 1

Bounding
box
decoder 1

Input
sequence 2
Sequence
positional
encoding 2
Bounding
box 2

<SOS> | <table> | <tr>
+ | + | +
0 | 1 | 2
+ | + | +
Box$_\phi$ | Box$_\phi$ | Box$_\phi$

Coordinate
sequence
mapping

+
0

Sequence
location
mapping

(3)

FIG. 11

38

Predicted
bounding box
coordinate
sequence 1

X1

Linearization
and softmax

Bounding
box
decoder 1

Image
feature 1

Sum

Positional
encoding

Input coordinate
sequence 1
Sequence
positional
encoding 1

+

0

(1)

Predicted
bounding box
coordinate
sequence 2

X1    Y1

Linearization
and softmax

Bounding
box
decoder 1

Image
feature 1

Sum

Positional
encoding

Input coordinate
sequence 2
Sequence
positional
encoding 2

X1

+    +

0    1

(2)

Predicted
bounding box
coordinate
sequence 3

X1    Y1    X2

Linearization
and softmax

Bounding
box
decoder 1

Image
feature 1

Sum

Positional
encoding

Input
coordinate
sequence 3
Sequence
positional
encoding 3

X1    Y1

+    +    +

0    1    2

(3)

Predicted
bounding
box
coordinate
sequence 4

X1    Y1    X2    Y2

Linearization
and softmax

Bounding
box
decoder 1

Image
feature 1

Sum

Positional
encoding

Input
coordinate
sequence 4
Sequence
positional
encoding 4

X1    Y1    X2

+    +    +    +

0    1    2    3

(4)

FIG. 12

Data processing apparatus
1300

Obtaining unit 1310

Processing unit 1320

Outputting unit 1330

FIG. 13

Training apparatus 1400

Obtaining unit 1410

Processing unit 1420

FIG. 14

Computing device 1500

Output device 1506

Input device 1507

Processor 1501

CPU 15011

Memory unit 1502

Operating system kernel 15021

Bus 1505

Storage medium 1504

Communication interface 1503

Computer instructions 15022

FIG. 15

## INTERNATIONAL SEARCH REPORT

| International application No. |
| --- |
| **PCT/CN2022/142667** |

| A. | CLASSIFICATION OF SUBJECT MATTER |
| --- | --- |

G06V30/412(2022.01)i

According to International Patent Classification (IPC) or to both national classification and IPC

| B. | FIELDS SEARCHED |
| --- | --- |

Minimum documentation searched (classification system followed by classification symbols)

G06V

Documentation searched other than minimum documentation to the extent that such documents are included in the fields searched

Electronic data base consulted during the international search (name of data base and, where practicable, search terms used)

CNTXT, ENTXT, ENTXTC, CNABS, DWPI, CNKI: 表格, 标记语言, 识别, 图像, 包围框, 位置, 文本, table, XML, recognize, image, bounding box, position, location, text

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 112528863 A (PING AN LIFE INSURANCE COMPANY OF CHINA, LTD.) 19 March 2021 (2021-03-19) <br> description, paragraphs 53-179 | 1-23 |
| Y | CN 113033165 A (TENCENT TECHNOLOGY (SHENZHEN) CO., LTD.) 25 June 2021 (2021-06-25) <br> description, paragraphs 45-77 | 1-23 |
| A | CN 113297975 A (NEW ORIENTAL EDUCATION & TECHNOLOGY GROUP CO., LTD.) 24 August 2021 (2021-08-24) <br> entire document | 1-23 |
| A | CN 113536856 A (ALIBABA GROUP HOLDING LTD.) 22 October 2021 (2021-10-22) <br> entire document | 1-23 |
| A | CN 113807326 A (AEROSPACE HONGKA INTELLIGENT TECHNOLOGY (BEIJING) CO., LTD.) 17 December 2021 (2021-12-17) <br> entire document | 1-23 |
| A | US 2008028291 A1 (XEROX CORP.) 31 January 2008 (2008-01-31) <br> entire document | 1-23 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 February 2023** | **13 February 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/142667**

| Patent document cited in search report | | | Publication date (day/month/year) | Patent family member(s) | | | Publication date (day/month/year) |
|---|---|---|---|---|---|---|---|
| CN | 112528863 | A | 19 March 2021 | None | | | |
| CN | 113033165 | A | 25 June 2021 | None | | | |
| CN | 113297975 | A | 24 August 2021 | None | | | |
| CN | 113536856 | A | 22 October 2021 | None | | | |
| CN | 113807326 | A | 17 December 2021 | CN | 113807326 | B | 25 February 2022 |
| US | 2008028291 | A1 | 31 January 2008 | US | 7752538 | B2 | 06 July 2010 |
| | | | | EP | 1883037 | A2 | 30 January 2008 |

Form PCT/ISA/210 (patent family annex) (July 2022)